# EUROPÄISCHE PATENTANMELDUNG

(11) **EP 1 930 681 A1**
(43) Veröffentlichungstag der Anmeldung: **11.06.2008**
(21) Anmeldenummer: 07023234.3
(22) Anmeldetag: 30.11.2007
(51) Int. Cl.: F28D 9/00, F28F 9/00, B23K 1/00

(54) **Wärmetauscher, Anordnung und Verfahren zur Herstellung eines Wärmetauschers**

(30) Priorität: 30.11.2006 DE 102006057050
(71) Anmelder: Behr GmbH & Co. KG, 70469 Stuttgart (DE)
(72) Erfinder: Maucher, Ulrich, 70825 Korntal-Münchingen (DE); Kämmerer, Martin, 74321 Bietigheim-Bissingen (DE)

(57) **Zusammenfassung**

Es wird ein Wärmetauscher, insbesondere ein Abgas-Wärmetauscher, oder Ladeluft-Wärmetauscher, zum Wärmetausch zwischen einem ersten Fluid, insbesondere einem Abgas oder Ladeluft, und einem zweiten Fluid, insbesondere einem Kühlmittel angegeben, der aufweist: einen Block zu voneinander getrennten und wärmetauschenden Führung des ersten und zweiten Fluids; ein Blockabschlusselement zur Anbindung des Blocks an einen Fluidanschluss. Um die insbesondere bei einem Lötprozess auftretenden Probleme zu beheben und im Betrieb Thermospannungen zu verringern, weist das Blockabschlusselement eine blockseitig angeordnete Anlagefläche auf, wobei eine Flächennormale der Anlagefläche im Wesentlichen in einer radialen Richtung zur Büdung des radialen Anschlags für einen Blockrand ausgerichtet ist, und in einem Fügebereich zwischen der Anlagefläche und dem Blockrand ist ein Stoffschluss, insbesondere als eine Lötverbindung, gebildet. Die Erfindung führt auf eine Anordnung und ein Verfahren zur Herstellung des Wärmetauschers.

## Beschreibung

Die Erfindung betrifft einen Wärmetauscher, insbesondere einen Abgaswärmetauscher, zum Wärmetausch zwischen einem ersten Fluid, insbesondere einem Abgas oder Ladeluft, und einem zweiten Fluid, insbesondere einem Kühlmittel, aufweisend: einen Block zu voneinander getrennten und wärmetauschenden Führung des ersten und zweiten Fluids; mindestens ein Blockabschlusselement zur Anbindung des Blocks an mindestens einen Fluidanschluss. Die Erfindung betrifft auch eine Anordnung zur Herstellung eines solchen Wärmetauschers aufweisend: einen Block zur voneinander getrennten und wärmetauschenden Führung des ersten und zweiten Fluids; mindestens ein Blockabschlusselement zur Einbindung des Blockes an mindestens einen Fluidanschluss. Die Erfindung betrifft auch ein Verfahren zur Herstellung eines solchen Wärmetauschers, insbesondere mit einer genannten Anordnung, aufweisend die Schritte: Bereitstellen des mindestens einen Blockes zur voneinander getrennten und wärmetauschenden Führung des ersten und zweiten Fluids; Bereitstellen des mindestens einen Blockabschlusselements zur Anbindung des Blockes an mindestens einen Fluidanschluss.

Eingangs genannte Wärmetauscher, insbesondere Abgaskühler oder Ladeluftkühler, insbesondere für NKW-Anwendungen, zeichnen sich durch immer höhere Leistungsdichten aus. Dieses bedingt immer kompakterer Bauräume innerhalb derer immer weiter zunehme-nde Leistungen übertragen werden sollen. Dies führt zu diversen Anforderungen, die durch zukünftige Konzepte von Wärmetauschern abgedeckt werden sollten.

Ein eingangs genannter Wärmetauscher ist beispielsweise in US 2003/0010479 A1 offenbart. Dabei handelt es sich um einen innen berippten Wärmetauscher, bei dem der Block mit einem Boden versehen ist. Innenberippte Strömungskanäle werden in dem genannten Fall für Abgas an den beiden Blockenden jeweils in einen Boden eingesteckt und gefügt. Die Strömungskanäle werden in ein mit Kühlmittel geflutetes Gehäuse eingebracht, wobei ein Gehäusemantel von den beiden Böden an beiden Enden in axialer Richtung des Wärmetauschers abgeschlossen ist. Bei dem genannten Wärmetauscher besteht das Problem, dass sich die am Boden gegeneinander fixierten Strömungskanäle im Laufe des Lötprozesses nicht aufeinander zu bewegen können, wenn das Lot schmilzt, so dass dadurch Spalte entstehen können, welche Undichtigkeiten beim Wärmetauscher verursachen können. Ein Hauptnachteil bei der Herstellung eines solchen Wärmetauschers besteht somit in der fehlenden Flexibilität beim Lötprozess, insbesondere im Bodenbereich. In der Regel wird es notwendig sein, das Rohrbündel des Wärmetauschers bei Systemen mit Boden zu verpressen und separat, d.h. ohne Gehäuse zu löten. Dies erweist sich als aufwendig und nachteilig bei der Herstellung.

Aus DE 100 60 102 A1 ist ein Wärmetauscher der eingangs genannten Art ohne Boden bekannt. Beim Block des Wärmetauschers handelt es sich dabei um einen von Kühlmittel durchströmten Körper, der aus einzelnen Scheiben aufgebaut ist und dessen einzelne Strömungskanäle durch verlötete Näpfe verbunden sind, in denen das Kühlmittel quer zur axialen Richtung des Wärmetauschers zu- und abgeführt wird. Die Zwischenräume zwischen den Strömungskanälen werden in diesem Fall von Abgas durchströmt, wobei zur Verbesserung des Wärmeübergangs in diese Zwischenräume ein Turbulenzblech eingelötet ist. Bei diesem Konzept besteht der Hauptnachteil darin, dass der Gehäusemantel nicht gekühlt ist und daher, insbesondere bei hohen Belastungen, sehr heiß werden kann. Dies kann negative Auswirkungen auf Thermospannungen und den Hitzeschutz benachbarter Bauteile im Motorraum haben.

Generell, und insbesondere bei der zuletzt genannten Druckschrift, besteht somit das zusätzliche Problem von Thermospannungen bei einem Wärmetauscher. Im Allgemeinen erhitzen sich Abgas oder Ladeluft führende Teile sehr stark, während diejenigen Teile, welche mit Kühlmittel in Kontakt stehen, sich mit weniger stark erhitzen. Somit entstehen durch unterschiedliche thermische Ausdehnungen von unterschiedlich stark erhitzten und gleichzeitig benachbarten Bauteilen gegebenenfalls starke Spannungen im Material, die im schlimmsten Fall zum Ausfall des Wärmetauschers führen können. Derartige Thermospannungen werden in zunehmenden Maße besonders bei den eingangs genannten Wärmetauschern erwartet, die für höhere Leistungsdichten ausgelegt sind. Eine besonders kritische Stelle ist der Übergang zwischen dem wärmetauschenden Block, d.h. dem Kernteil, des Wärmetauschers zu einem Fluidanschluss, insbesondere einem Gaseintrittskanal. Teil des Übergangsbereichs ist üblicherweise ein Blockabschlusselement, das den Block an den Fluidanschluss anbindet. In sogenannen I-Flow-Ausführungen eines Wärmetauschers befindet sich auf zwei in der Regel gegenüberliegenden Seiten jeweils ein Blockabschlusselement mit in der Regel jeweils einem Fluidanschluss. In sogenannten U-Flow-Ausführungen eines Wärmetauschers liegt ein einziges Blockabschlusselement auf einer einzigen Seite des Blockes vor, das in der Regel zwei Fluidanschlüsse anbindet. In diesem mindestens einen Bereich eines Blockabschlusselementes liegt ein vergleichsweise gut gekühlter, eher filigran beispielsweise aus dünnen Blechteilen aufgebauter Teil des Wärmetauschers in direkter Nachbarschaft zu einem eher aus dickwandigeren Teilen aufgebauten, vergleichsweise stark erhitzten Fluidanschluss, beispielsweise einem Gaseintrittskanal. Umgekehrt ist dies auch der Fall im Bereich eines Fluidanschlusses in Form eines Kühlmittelanschlusses in Nachbarschaft zu vergleichsweise dazu erhitzten Teilen des Blocks.

Wünschenswert wäre es, die Auswirkungen von Thermospannungen zu verringern und gleichzeitig die Probleme im Rahmen eines Herstellungsprozesses unter Bildung von stoffschlüssigen Verbindungen, insbesondere eines Lötherstellungsprozesses, zu vermindern. Generell soll ein verbesserter Stoffschluss, beispielsweise eine verbesserte Lötverbindung und/oder Schweißverbindung und/oder Klebeverbindung bei einem Herstellungsprozess eines Wärmetauschers erreicht werden.

An dieser Stelle setzt die Erfindung an, deren Aufgabe es ist, einen Wärmetauscher anzugeben, der unter Beteiligung einer Stoffschlussverbindung, insbesondere eines Lötprozesses, mit vergleichsweise verringerter Problematik beim Stoffschluss, insbesondere beim Lötprozess, hergestellt werden kann und bei dem gleichzeitig die Problematik von Thermospannungen im Einsatzbetrieb vergleichsweise verringert sind, Aufgabe der Erfindung ist es auch, eine Anordnung und ein Verfahren zur Herstellung für einen Wärmetauscher anzugeben, welche ebenfalls der vorgenannten Problematik Rechnung tragen.

Hinsichtlich des Wärmetauschers wird die Aufgabe gelöst durch einen Wärmetauscher der eingangs genannten Art, bei dem erfindungsgemäß vorgesehen ist, dass das Blockabschlusselement eine blockseitig angeordnete Anlagefläche aufweist, wobei eine Flächennormale der Anlagefläche im wesentlichen in einer radialen Richtung zur Bildung eines radialen Anschlags für einen Blockrand ausgerichtet ist, und bei dem in einem Fügebereich zwischen der Anlagefläche und dem Blockrand ein Stoffschluss, insbesondere als eine Lötverbindung, gebildet ist.

Hinsichtlich der Anordnung wird die Aufgabe durch die Erfindung gelöst durch eine Anordnung der eingangs genannten Art, bei der erfindungsgemäß das Blockabschlusselement eine blockseitig angeordnete Anlagefläche aufweist, wobei eine Flächennormale der Anlagefläche im Wesentlichen in einer radialen Richtung zur Bildung eines radialen Anschlages für einen Blockrand ausgerichtet ist und wobei zwischen der Anlagefläche und dem Blockrand ein für die Bildung eines Stoffschlusses, insbesondere als Lötverbindung, vorgesehener Spalt gebildet ist.

Betreffend das Herstellungsverfahren wird die Aufgabe gelöst durch ein Herstellungsverfahren der eingangs genannten Art, bei dem erfindungsgemäß das Blockabschlusselement eine blockseitig angeordnete Anlagefläche aufweist, wobei eine Flächennormale der Anlagefläche im Wesentlichen in einer radialen Richtung zur Bildung eines radialen Anschlages für einen Blockrand ausgerichtet ist, wobei zwischen der Anlagefläche und dem Blockrand ein für die Bildung eines Stoffschlusses, insbesondere als Lötverbindung, vorgesehener Spalt gebildet wird, wobei das Blockabschlusselement an den Block gesteckt wird. Im bevorzugten Fall einer Lötverbindung wird im Rahmen einer Weiterbildung der Spalt mit Lot gefüllt und/oder das Lot in direkter Nachbarschaft des Spaltes in einem zur Ausbildung eines Lotdepots geeigneten Bereich angeordnet und ein Lötprozess ausgeführt, wobei sich, während das Lot schmilzt, der Blockrand an die Anlagefläche anlegt.

Die Erfindung geht von der Überlegung aus, dass es sich beim Blockabschlusselement, sei es ein Flansch oder ein Diffusor oder ein anderes derartiges Teil, in der Regel um ein vergleichsweise dickwandrigeres Bauteil handelt, das an ein ebenfalls vergleichsweise dickwandiges Bauteil des Blockes angebunden sein sollte. In einer besonders bevorzugten Ausführungsform ist letzteres bevorzugt ein Gehäuse des Blockes. Eine weitere, andere Möglichkeit wäre auch ein Boden des Blockes, in welchem Strömungskanäle des Blockes eingesteckt sind.

Darüber hinaus geht die Erfindung von der Überlegung aus, dass gerade bei den NKW-Anwendungen im mittleren Bereich ein deutlicher Trend zu stoffschlüssig hergestellten, insbesondere gelöteten, Wärmetauschersystemen festzustellen ist, z.B. bei denen in gasführenden Strömungskanälen wärmeübertragende Innenrippen vorgesehen sind. Es hat sich u.a. dort gezeigt, dass die Verbindung zwischen Kanalwand und Innenrippe über einen Lötprozess sinnvoll ist.

Die Erfindung hat zudem erkannt, dass sich die Bauteildimensionen nach dem Lötprozess von den Dimensionen vor dem Lötprozess in der Regel deutlich unterscheiden, da eine vor dem Löten in einer festen Schicht vorliegende Lotschicht nach dem Schmelzen durch das Zusammenrücken der einzelnen Bauteile teilweise oder nahezu vollständig aus einem Spalt für das Lot zwischen den zu verlötenden Bauteilen verdrängt wird. Mit anderen Worten, der Spalt für das Lot ist in der Regel größer als der spätere Fügebereich der Lotverbindung. Nach dem Erstarren des Lots liegen daher in der Regel verringerte Bauteildimensionen vor, wobei dennoch in der Regel verringerte Bauteiltoleranzen eingehalten werden sollten. Die Erfindung hat erkannt, dass beim Fügen eines Blockabschlusselements an einen Block ein Prozess zielführend ist, der relativ unabhängig von Bauteiltoleranzen ist und der wechselnde Spaltgeometrien überbrücken kann.

Gemäß dem erfinderischen Konzept ist deshalb beim Blockabschlusselement eine blockseitig angeordnete Anlagefläche vorgesehen, wobei eine Flächennormale der Anlagefläche im Wesentlichen in einer radialen Richtung zur Bildung eines radialen Anschlages für einen Blockrand ausgerichtet ist. Beim Herstellungsverfahren wird das Blockabschlusselement an den Block gesteckt. Ein zwischen der Anlagefläche und dem Blockrand für die Bildung eines Stoffschlusses, insbesondere als Lötverbindung, vorgesehener Spalt wird mit Lot gefüllt und/oder das Lot wird in direkter Nachbarschaft des Spaltes in einem zur Ausbildung eines Lotdepots geeigneten Bereich angeordnet. Beim Ausführen des Lötprozesses schmilzt das Lot und der Blockrand legt sich an die Anlagefläche an. Dies führt gemäß dem Konzept der Erfindung im Fügebereich zwischen der Anlagefläche und dem Blockrand zu einem besonders gut ausgebildeten Stoffschluss als Lötverbindung.

Ganz allgemein wird gemäß dem Konzept der Erfindung ein verbesserter Stoffschluss zwischen Anlagefläche und Blockrand erreicht, z.B. auch im Rahmen einer Schweiß- und/oder Klebeverbindung.

Mit anderen Worten sieht das erfinderische Konzept dem Wesen nach vor, dass der Stoffschlussprozess, insbesondere Lötprozess, bei seiner Ausführung zu einem Anliegen der zu fügenden Bereiche, vorliegend der Anlagefläche und dem Blockrand, führt und gleichzeitig durch die Anbindung des Blockabschlusselements an den Block gewährleistet wird, dass beim späteren Betrieb Thermospannungen vergleichsweise gering gehalten sind. Während des Stoffschlusses, z.B. Lötprozesses, Schweiß- und/oder Klebeprozesses legt sich der Blockrand des Blockes also an die radiale Anlagefläche des Blockabschlusselementes an. Im Falle einer Lötverbindung geschieht dieses spätestens, wenn bevorzugt bevor die im Block befindlichen Lotbereiche schmelzen. Gleichzeitig schmilzt auch der für die radiale Anlagefläche vorgesehene Lotbereich, so dass sich eine besonders zuverlässige Verlötung ergibt.

Demgemäß ist in einer mit besonderen Vorteilen versehenen Weiterbildung der Erfindung vorgesehen, dass der Blockrand vergleichsweise stabil ausgebildet ist. Es eignet sich dafür in einer besonders bevorzugten Weise das Gehäuse eines Blockes. Mit anderen Worten, der Blockrand ist in besonders bevorzugter Weise Teil des Gehäuses, was beim späteren Betrieb Thermospannungen im Fügebereich weitgehend vermeidet. Dennoch sind andere Möglichkeiten nicht ausgeschlossen, beispielsweise kann ein Blockrand auch Teil eines Bodens eines Blockes sein.

Weitere Vorteile des erfinderischen Konzeptes ergeben sich im Rahmen vorteilhafter Weiterbildungen der Erfindung, die den Unteransprüchen zu entnehmen sind.

Grundsätzlich ist das Erreichen des erfinderischen Konzeptes bereits mit einer Anlagefläche möglich, die als eine wenigstens an einem Teil des Umfanges des Blockabschlusselementes verlaufende Anlagefläche gebildet ist. Besonders vorteilhaft ist jedoch, dass die Anlagefläche entlang eines vollen Umfanges des Blockabschlusselements durchgehend verläuft. Dadurch wird eine besonders hohe Dichtigkeit des Wärmetauschers und ein besonders zuverlässiges Fügen erreicht. In vorteilhafter Weise trägt auch bei, dass ein Verlauf und/oder eine Kontur der Anlagefläche zur Bildung einer formschlüssigen Verbindung zwischen der Anlagefläche und dem Blockrand einem Verlauf und/oder einer Kontur des Blockrandes im Wesentlichen entspricht. Insbesondere zum Erreichen einer verbesserten Stabilität kann die Anlagefläche darüber hinaus Teil einer teilweisen oder vollständig entlang des Umfanges umlaufenden Stufenkontur sein.

In besonders vorteilhafter Weise ist die Anlagefläche Teil einer entlang des Umfangs umlaufenden Nutkontur. Mit anderen Worten ist ein quer zur Nut verlaufender Querschnitt mit einer Nutbasis und zwei sich gegenüberliegenden Nutschenkein versehen, wobei einer der Nutschenkel in der Nutkontur von der Anlagefläche gebildet ist, vorzugsweise der am Blockabschlusselement innenliegende Nutschenkel. Ein am Blockabschlusselement weiter außen liegender Nutschenkel kann- ebenso wie ein innen liegender Nutschenkel - teilweise oder vollständig entlang des Umfangs des Blockabschlusselementes verlaufen. Dazu hat es sich insbesondere als vorteilhaft erwiesen, einen teilweise umlaufenden Nutschenkel durch am Blockabschlusselement angebrachte, z.B. angesetzte oder angeformte oder integral mit dem Blockabschlusselement gebildete, Materialsegmente auszubilden. Eine Reihe solcher entlang des Umfangs mit jeweils dazwischen liegender Lücke angeordnete Materialsegmente bilden in vorteilhafter Weise einen teilweise entlang des Umfangs verlaufenden Nutschenkel, insbesondere gegenüberliegend einer den anderen Nutschenkel bildenden Anlagefläche. Letztere kann in einer besonders bevorzugten Ausführungsform vollständig entlang des Umfangs des Blockabschlusselements umlaufen.

Es hat sich als besonderes vorteilhaft erwiesen, dass das Blockabschlusselement eine Nut aufweist, vorzugsweise eine Nut in der zuvor erläuterten Weise, insbesondere eine Nut, die teilweise oder vollständig umlaufend am Blockabschlusselement gebildet ist. Diese oder eine auf andere Weise gebildete Nut kann in vorteilhafter Weise einen Blockrand aufnehmen. Insbesondere kann dazu eine stirnseitige Kontur des Blockrandes in der Nut aufgenommen sein, vorzugsweise direkt gegenüberliegend bzw. anliegend an einer Nutbasis der Nutkontur. Gemäß der zuvor erläuterten Weiterbildung der Erfindung ist es in besonders einfacher Weise möglich, das Blockabschlusselement auf den Blockrand sicher aufzustecken, um das Blockabschlusselement dort formschlüssig zu halten. Durch eine zuvor erläuterte oder ähnliche Ausführung einer Nut am Blockabschlusselement umgreift das Blockabschlusselement einen Blockrand. Vorteilhaft kann innenseitig die Anlagefläche und außenseitig beispielsweise die erwähnten Materialsegmente angeordnet sein. Beispielsweise hat sich ein U-förmiger Nutquerschnitt mit einem innenseitig des Blockrandes liegenden Schenkel und einem außenseitig des Blockrandes liegenden Schenkel als besonders vorteilhaft erwiesen. Darüber hinaus sind je nach Ausführung auch andere Nutkonturen realisierbar, beispielsweise V-förmige, eckige oder gerundete Nutkonturen.

Es hat sich insbesondere eine Lötverbindung als vorteilhaft erwiesen, bei der die Lötverbindung einen Fügebereich zwischen Anlagefläche und Blockrand von weniger als 0,2 mm, vorzugsweise von weniger als 0,1 mm, einnimmt. Es wurde erkannt, dass bei üblichen Bauformen von Wärmetauschern die Kontur bzw. der Verlauf einer umlaufenden Anlagefläche besonders vorteilhaft so ausgeführt werden sollte, dass sie weitgehend formschlüssig zur Gehäuseinnenkontur nach dem Lötvorgang ist - um dieses zu erreichen, wurden überraschend die genannten Abmessungen als besonders vorteilhaft erkannt.

Dies kann auch bedeuten, dass vor dem Löten erhebliche Spalte zwischen Blockrand und Anlagefläche bestehen könnten und betrifft insbesondere eine Hauptlötrichtung. Unter einer Hauptlötrichtung ist vorliegend diejenige Richtung zu verstehen, in welcher der größte Abmessungsschwund beim Lötvorgang eines Wärmetauschers zu erwarten ist und ist in der Regel diejenige Richtung, in welcher übereinander eine überwiegende Zahl von Lötschichten angeordnet ist. Im Rahmen dieser Überlegung wurde gemäß einer Weiterbildung der Erfindung erkannt, dass Spalte in einem Bereich oberhalb von 0,2 mm vor dem Löten einen sicheren Lötprozess beeinträchtigen könnten. Sinngemäß wird im Rahmen einer Weiterbildung des erfinderischen Konzeptes davon ausgegangen, dass ein Schwund der Abmaße eines Wärmetauscherblockes nur in der Hauptlötrichtung erfolgt und in der Richtung senkrecht zur Hauptlötrichtung nur ein vergleichsweise geringerer Schwund von maximal 0,2 mm gewährleistet werden kann.

Dementsprechend sieht eine Weiterbildung des Wärmetauschers vor, dass die Anlagefläche und/oder der Blockrand, zwischen der ein Formschluss als eine Lötverbindung gebildet ist, zum überwiegenden Teil senkrecht oder in einem stumpfen Winkel zu einer Hauptlötrichtung angeordnet ist.

Vorteilhaft kann des weiteren die Anlagefläche und der Blockrand an wenigstens einer Stelle vor einer Lötverbindung aneinander fixiert sein - beispielsweise durch eine stoffschlüssige Verbindung wie einen oder mehrere Schweißpunkte und/oder durch Formschlussverbindungen wie eine Crimpverbindung, Laschen oder eine Bördelverbindung. Auf diese Weise kann erreicht werden, dass eine relative Auseinanderbewegung zwischen einem entsprechenden Teil des Blockes und einem entsprechenden Teil des Blockabschlusselements während des Lötprozesses weitgehend eingeschränkt bzw. idealerweise vollständig unterbunden ist. Dies wiederum ermöglicht eine prozesssichere Verlötung der entsprechenden Teile, insbesondere im Bereich des Blockrandes und der Anlagefläche.

In einer weiteren bevorzugten Weiterbildung ist die Anlagefläche und der Blockrand, zwischen der ein Stoffschluss als eine Lötverbindung gebildet ist, zum überwiegenden Teil in einer Richtung entlang der wenigstens einen fixierten Stelle gebildet. Mit anderen Worten, gemäß dieser Weiterbildung ist der größere Teil eines Fügebereiches von weitgehend relativ zueinander feststehenden oder sogar fixierten Teilen des Blockes und des Blockabschlusselements, insbesondere des Blockrandes und der Anlagefläche, gebildet und nur ein kleinerer Teil eines Fügebereiches wird von solchen Teilen gebildet, von denen zu erwarten ist, dass sie während des Lötprozesses frei, also nicht fixiert gegenüber dem Blockabschlusselement, sind.

Insgesamt hat es sich als besonders vorteilhaft erwiesen, dass die Anlagefläche an einem vom Blockabschlusselement blockseitig abstehenden Absatz gebildet ist. Darüber hinaus ist in besonders bevorzugter Weise der Blockrand an einem Gehäuse des Blockes gebildet - dies vor dem Hintergrund, dass sich Systeme mit Gehäuse im Rahmen des Konzeptes der Erfindung als besonders gut realisierbar erwiesen haben.

Es hat sich darüber hinaus gezeigt, dass ein mehrteiliges Gehäuse, insbesondere ein Gehäuse mit einem Mantel und einem Deckel vorteilhaft sind. Ein Mantel wird dabei in der Regel Boden- und Seitenteile des Gehäuses ausmachen. In einer besonders bevorzugten Weiterbildung kann sowohl der Mantel als auch der Deckel U-förmig ausgebildet sein, da sich dadurch ein besonders vorteilhaftes Aneinanderfügen der beiden Gehäuseteile erreichen lässt.

Im Rahmen einer besonders bevorzugten und in der Detailbeschreibung weiter ausgeführten Weiterbildung der Erfindung hat es sich als vorteilhaft erwiesen, dass Strömungskanäle des Blockes in Form von aneinandergefügten und mit napfartigen Anschlüssen versehenen Scheiben gebildet sind, welche von dem zweiten Fluid, insbesondere Kühlmittel, zur Durchströmung vorgesehen sind. Auf diese Weise lässt sich in besonders vorteilhafter Weise erreichen, dass einerseits das Gehäuse mit dem ersten Fluid, insbesondere Abgas oder Ladeluft, durchströmt werden kann und zum anderen eine Kühlung des Gehäuses vorgesehen ist, nämlich durch die Verbindung des Gehäuses mit den aus Scheiben gebildeten Strömungskanälen.

Dementsprechend führt eine besonders bevorzugte Weiterbildung der Erfindung auf einen Wärmetauscher, bei dem das Btockabschtussetement wenigstens zur Anbindung des Blockes an einen Fluidanschluss in Form einer Eintrittsführung und/oder einer Austrittsführung für das erste Fluid, insbesondere Ladeluft oder Abgas, vorgesehen ist.

Das Blockabschlusselement ist in vorteilhafter Weise in Form eines Diffusors, insbesondere eines Eintrittsdiffusors oder Austrittsdiffusors, gebildet. Darüber hinaus hat sich die Ausbildung eines Blockabschlusselements auch in Form eines Flansches, insbesondere eines Eintrittflansches oder Austrittflansches, als vorteilhaft erwiesen.

Ein Wärmetauscher ist besonders vorteilhaft in Form eines Abgaswärmetauschers oder in Form eines Ladeluftwärmetauschers gemäß dem vorliegenden Konzept der Erfindung ausgebildet.

Betreffend die Anordnung zur Herstellung des Wärmetauschers sind weitere Vorteile und Weiterbildungen der Erfindung den entsprechenden Unteransprüchen zu entnehmen.

In vorteilhafter Weise ist bei der Anordnung, aus den oben erläuterten Gründen der Spalt für die Bildung eines Stoffschlusses als eine Lötverbindung in seiner Breite begrenzt, vorzugsweise auf eine Breite von weniger als 0,2 mm, insbesondere von weniger als 0,1 mm.

Vorzugsweise ist der Spalt mit Lot gefüllt und/oder das Lot ist in direkter Nachbarschaft des Spaltes in einem zur Ausbildung eines Lotdepots geeigneten Bereich angeordnet. Vorteilhafte Weiterbildungen sehen vor, dass das Lotdepot in einem zwischen Block und Blockabschlusselement ausgebildeten Abstandbereich gebildet ist. Dieser kann u.a. durch ein nicht vollständiges Anstecken des Blockabschlusselementes an den Block oder eine Fase am Blockabschlusselement erreicht werden und wird in Bezug auf die Detailbeschreibung an Beispielen eines Abstandbereiches, z.B. in Form eines Spielabstandes oder einer Fase näher erläutert.

Darüber hinaus ergeben sich vorteilhafte Weiterbildungen der Anordnung aufgrund der Erkenntnis der Erfindung, dass ein Schwund des Wärmetauschers insbesondere in einer Hauptlötrichtung beim Lötvorgang erfolgt. Demgemäß sieht eine Weiterbildung der Anordnung vor, dass die Anlagefläche und der Blockrand an wenigstens einer Stelle vor einer Lötverbindung aneinander fixiert sind, insbesondere die Anlagefläche und der Blockrand zwischen der ein Formschluss als eine Lötverbindung gebildet werden soll, zum überwiegenden Teil entlang der wenigstens einen fixierten Stelle gebildet ist. Im Falle eines mehrteiligen Gehäuses, insbesondere eines aus Mantel und Deckel gebildeten Gehäuses hat es sich als vorteilhaft erwiesen, dass der Blockrand und die Anlagefläche nur im Bereich des Mantels vor einer Lötverbindung aneinander fixiert sind. Außerdem kann es vorteilhaft sein, dass der Spalt eine Breite zwischen Anlagefläche und Blockrand im Bereich des Deckels von weniger als 0,1 mm einnimmt.

Hinsichtlich des Verfahrens sind vorteilhafte Weiterbildungen den entsprechenden Unteransprüchen zu entnehmen.

In einer besonders bevorzugten Weiterbildung des Verfahrens wird das Blockabschlusselement in den Block eingesteckt, so dass die Anlagefläche gegenüber dem Blockrand angeordnet wird. Gemäß dieser Weiterbildung ist gewährleistet, dass insbesondere im Falle einer in vertikaler Richtung abnehmenden Dimension des Blockes gegenüber dem Blockabschlusselement gewährleistet ist, dass sich der Blockrand an die Anlagefläche anlegt. Zusätzlich hat dies Vorteile beim Montieren des Blockanschlusselementes am Block, da sie Anlagefläche eine Leithilfe beim Montieren darstellt.

In einer besonders bevorzugten Weiterbildung des Verfahrens ist darüber hinaus vorgesehen, dass der Block mit dem Blockabschlusselement in ein Lötgestell eingebracht wird, insbesondere in ein Lötgestell, das einen geringeren Wärmeausdehnungskoeffizienten aufweist als der Block und/oder das Blockabschlusselement. Vorteilhaft wird der Wärmeausdehnungskoeffizient des Lötgestells derart geringer als der des Blockes und/oder des Blockabschlusselementes gewählt, dass die Anlagefläche und der Blockrand bereits vor dem Schmelzen des Lotes aneinandergedrückt werden. Als vorteilhaft hat sich beispielsweise ein Lötgestell erwiesen, dass das Lötgestell ausreichend Bestandteile aus kohlefaserverstärktem Kohlenstoff aufweist. Das Konzept dieser Weiterbildung sieht vor, dass bei einer Erwärmung des Blockes im Rahmen des Lötprozesses der Block sich infolge der Temperaturerhöhung thermisch ausdehnt und dass durch das in diesem Bereich thermisch stabile Lötgestell eine Presskraft auf den Block ausgeübt wird, bevor das Lot schmilzt.

Dies ist ein erheblicher Vorteil gegenüber Verfahren, die das Löten unter Gewichtsbelastung des Blockes vorsehen, da ein bei üblichen Verfahren vorgesehenes Gewicht in seiner Wirkung erst einsetzt, wenn das Lot schmilzt. Es ist aber gemäß dem Konzept dieser Weiterbildung insbesondere vorteilhaft, dass ein Pressdruck bereits ausgeübt ist, während das Lot noch nicht geschmolzen ist. Somit wird durch eine geeignete Wahl des Lötgestells und seines Wärmeausdehnungskoeffizienten, abgestimmt auf den Block, eine besonders sichere Lötverbindung im Rahmen der Weiterbildung des Herstellungsverfahrens möglichst.

Blockabschlusselement und Gehäuse und weitere Teile des Wärmetauschers können auf verschiedenste Weise und in unterschiedlicher Kombination hergestellt werden. So kann das Blockabschlusselement besonders vorteilhaft durch einen Tiefziehprozess oder Gussprozess hergestellt sein, insbesondere für den Fall, dass es einen Diffusor einteilig umfasst. Ein Tiefziehprozess oder Gussprozess sowie auch einen Stanzprozess eignen sich darüber hinaus in besonders vorteilhafter Weise auch für einen Flansch. Die Anlagefläche lässt sich bei allen Teilen besonders effektiv im Rahmen eines Fräsprozesses und/oder eines Erodierprozesses anbringen.

Das Gehäuse bzw. die Gehäuseteile, insbesondere der Mantel und der Deckel, lassen sich vorteilhaft als ein Tiefziehteil bereitstellen.

Während sich die Erfindung als besonders nützlich im Rahmen einer Verwendung des Wärmetauschers, in Form eines Abgaswärmetauschers, insbesondere als Abgaskühler, zur Abgaskühlung in einem Abgasrückführsystem einer Brennkraftmaschine eines Fahrzeuges und/oder als Zuheizer zur Innenraumerwärmung eines Kraftfahrzeuges oder auch als Ladeluftwärmetauscher, insbesondere als Ladeluftkühler zur direkten oder indirekten Kühlung von Ladeluft in einem Ladeluftzuführsystem für eine Brennkraftmaschine eines Kraftfahrzeuges erweist und in diesem Sinne zu verstehen ist und während die Erfindung im Folgenden im Detail anhand von Beispielen beschrieben ist, welche im Wesentlichen das Konzept eines Wärmetauschers verwirklichen, bei dem ein Block ohne Boden ausgebildet ist und Stromführungskanäle in Form von aneinandergefügten Scheiben für ein Kühlmittel vorgesehen ist, so sollte dennoch klar sein, dass das hier beschriebene Konzept, wie beansprucht, ebenfalls nützlich im Rahmen von anderen Anwendungen ist, welche außerhalb der explizit aufgeführten Beispiele im engeren Sinne liegen und Anwendungen betreffen, welche außerhalb dieser Beispiele liegen. Beispielsweise könnte das vorgestellte erfinderische Konzept ebenso Anwendung finden für die Verwendung eines Wärmetauschers als Ölkühler, insbesondere zur Kühlung von Motoröl und/oder Getriebeöl. Weiters eignet sich auch eine Verwendung als Kältemittelkühler oder Kältemittelkondensator in einem Kältemittelkreislauf einer Klimaanlage eines Kraftfahrzeuges. Weitere Ausführungsarten betreffen auch Wärmetauscher, bei denen der Block mit einem Boden versehen ist und die Anbindung eines Blockabschlusselementes beispielsweise an einem Boden erfolgt oder bei denen der Wärmetauscher ohne Gehäuse vorgesehen ist.

Ausführungsbeispiele der Erfindung werden nun nachfolgend anhand der Zeichnung beschrieben. Diese soll die Ausführungsbeispiele nicht maßstäblich darstellen, vielmehr ist die Zeichnung, wo zur Erläuterung dienlich, in schematisierter und/oder leicht verzerrter Form ausgeführt. Im Hinblick auf Ergänzungen der aus der Zeichnung unmittelbar erkennbaren Lehren wird auf den einschlägigen Stand der Technik verwiesen.

Dabei ist zu berücksichtigen, dass vielfältige Modifikationen und Änderungen betreffend Form und Details einer Ausführungsform vorgenommen werden können, ohne von der allgemeinen ldee der Erfindung abzuweichen. Die in der vorstehenden Beschreibung, in der Zeichnung sowie in den Ansprüchen offenbarten Merkmale der Erfindung können sowohl einzeln als auch in Kombination für die Weiterbildung der Erfindung wesentlich sein. Die allgemeine Idee der Erfindung ist nicht beschränkt auf die exakte Form oder das Detail der im Folgenden gezeigten und beschriebenen Ausführungsform oder beschränkt auf einen Gegenstand, der eingeschränkt wäre im Vergleich zu dem in den Ansprüchen beanspruchten Gegenstand. Bei angegebenen Bemessungsbereichen sollen auch innerhalb der genannten Grenzen liegende Werte als Grenzwerte offenbart und beliebig einsetzbar und beanspruchbar sein. Die Zeichnung zeigt im Detail unterschiedliche Ausführungsformen gemäß dem Konzept der Erfindung, wobei sich eine Realisierung des Blocks im Detail gemäß einem Wärmetauscher in den deutschen Patentanmeldungen der Anmelderin mit den Aktenzeichen 05 B 135 B und 05 B 286 B als besonders vorteilhaft erwiesen hat. Die genannten Anmeldungen werden durch diese Referenz hiermit in den Offenbarungsgehalt dieser Anmeldung aufgenommen.

Im Einzelnen zeigt die Zeichnung in:
- Fig. 1:: eine schematische Darstellung einer besonders bevorzugten Ausführungsform eines Wärmetauschers gemäß der Erfindung mit einer bevorzugten Anbindungsart eines Blockabschlusselementes an ein Gehäuse eines Blockes eines Abgaskühlers, welcher im Einzelnen nicht näher gezeigt ist;
- Fig. 2:: ein Detail des Blockabschlusselements von Fig. 1, das vorliegend in Form eines Flansches gebildet ist;
- Fig. 3:: eine weitere bevorzugte Ausbildung des Blockabschlusselementes im Rahmen des Konzeptes der vorliegenden Erfindung in Form eines einteilig gebildeten Diffusors;
- Fig. 4:: eine weitere Ausbildung eines Blockabschlusselements im Rahmen des Konzeptes der vorliegenden Erfindung in Form eines als bearbeitetes Gussteil gefertigten einteiligen Flansches;
- Fig. 5:: eine weitere Ausbildung eines Blockabschiusselements im Rahmen des Konzeptes der Erfindung in Form eines als Vierlochflansch aus zwei verlöteten Stanzteilen gebildeten Flansches;
- Fig. 6:: eine weitere Ausbildung eines Blockabschlusselements im Rahmen des Konzeptes der vorliegenden Erfindung in Form eines als Guss- oder Tiefziehteils gebildeten Flansches, bei dem, anders als in Fig. 3, ein Diffusor eingesteckt oder stumpf aufgesetzt werden kann;
- Fig. 7:: eine die Hauptlötrichtung verdeutlichende schematische Darstellung der Lotschichten beim Abgaskühler gemäß Fig. 1;
- Fig. 8:: eine schematische Darstellung unterschiedlicher Gehäuseformen, die bei den in Fig. 1 bis Fig. 7 und Fig. 11 erläuterten Ausführungsformen der Erfindung besonders vorteilhaft einsetzbar sind;
- Fig. 9:: eine schematische Detaildarstellung eines Lotdepots in unmittelbarer Nachbarschaft einer Anlagefläche und eines Blockrandes bei einer bevorzugten Ausführungsform gemäß der Erfindung,
- Fig. 10:: eine weitere mögliche Ausbildung eines Lotdepots in Ergänzung zu Fig. 9,

- Fig. 11: eine weitere Ausbildung eines Blockabschlusselements im Rahmen des Konzepts der vorliegenden Erfindung, bei dem - insbesondere in Weiterbildung der in Fig. 2 dargestellten Ausführungsform - eine teilweise entlang des Umfangs umlaufende Nutkontur gebildet ist, indem der Anlagefläche gegenüber an einem äußeren Rand des Blockabschlusselements Materialsegmente angeordnet sind;
- Fig. 12: eine schematische Darstellung einer weiteren besonders bevorzugten Gehäuseform, die bei den in Fig. 1 bis Fig. 10 und insbesondere Fig. 11 erläuterten Ausführungsformen der Erfindung besonders vorteilhaft einsetzbar ist;
- Fig. 13: in Ansichten (A), (B) und (C) ein unterschiedlich variiertes Detail der in Fig. 12 gezeigten Gehäuseform an der Stoßstelle zwischen einem Deckel und Mantel als Gehäuseteile des Gehäuses - in Ansicht (A) ein Mantel mit Materialausstellung und eingesetztem U-förmigen Deckel, in Ansicht (B) ein Mantel mit Materialausstellung und eingesetztem U-förmigem Deckel und dazwischenliegendem Distanzabsatz des Blockabschlusselements und in Ansicht (C) eine Ausführungsform ähnlich der in Ansicht (B) mit verrundeten Kanten.

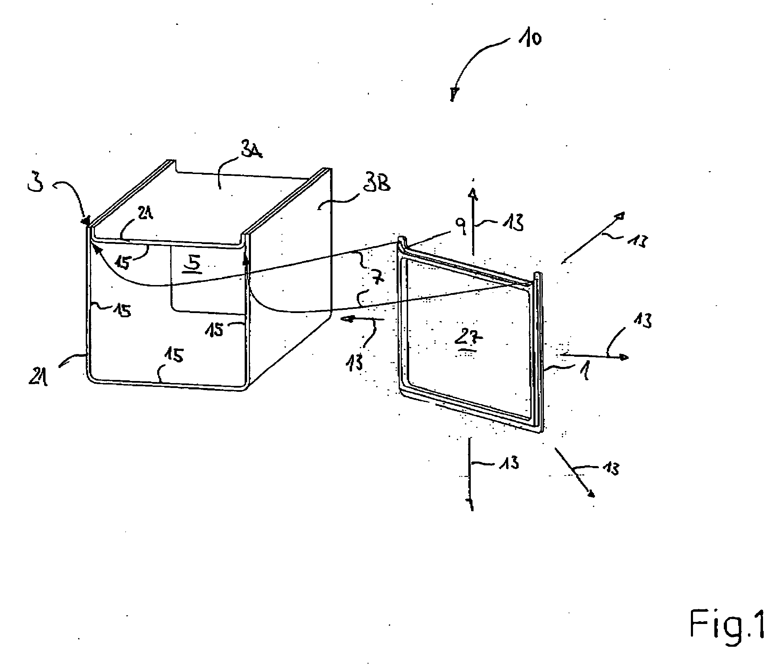

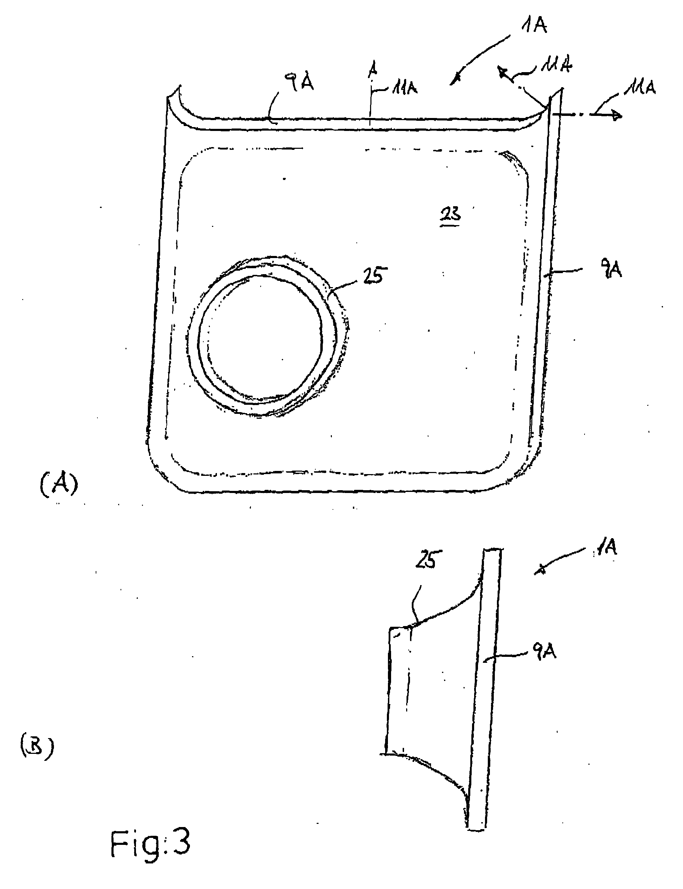

Fig. 1 zeigt einen Abgaskühler 10, der zum nicht näher gezeigten Wärmetausch zwischen einem heißen Abgas- und einem kalten Kühlmittel ausgelegt ist und dabei einen nicht näher gezeigten Block 5 zu voneinander getrennten und wärmetauschenden Führung des Abgases und des Kühlmittels aufweist sowie ein Blockabschlusselement 1 zur Anbindung des Blocks 5 an einen beispielsweise in Fig. 3 näher erläuterten Abgasanschluss. Ein Block 5 wird zur Bildung des Wärmetauschers 10 vorliegend in einem aus einem Deckel 3A und einem Mantel 3B gebildeten mehrteiligen Gehäuse 3 angeordnet.

Das erfinderische Konzept hat sich als besonders vorteilhaft bei einer Ausführungsform erwiesen, bei der der Block 5 eine Anzahl von nicht näher gezeigten zweiten Strömungskanälen zur Führung des Kühlmittels aufweist, welche in Form von aufeinandergefügten Scheiben gebildet sind, die jeweils in einem dazwischenliegenden Zwischenraum einen Strömungskanal bilden, wobei die Strömungskanäle über napfförmige Durchführungen miteinander verbunden und an einem Kühlmittelanschluss angeschlossen sind. Ein Abgas wird bei dieser nicht näher gezeigten Ausführungsform in das Gehäuse 3 aufgenommen, wodurch erste Strömungskanäle für das Abgas realisiert sind und das Abgas wird quer zur Kühimittelströmung, vorliegend auf der Stirnseite des Gehäuses, die ebenfalls zur Anbringung 7 des Blockabschlusselements 1 vorgesehen ist, durch einen Eintrittsanschluss zugeführt und auf der gegenüberliegenden Seite durch einen Austrittanschluss abgeführt. Ein Strömungskanal kann bei dieser Ausführungsform zusätzlich mit Wärmeleitelementen in Form von an einer Strömungskanalinnenseite angebrachten Innenrippen und/oder an einer Strömungskanalaußenseite angebrachten Außenrippen versehen sein. Zusätzlich kann der Block 5 auch eine Turbulenzeinrichtung aufweisen, z.B. ein Turbulenzblech, das für eine geeignete Verwirbelung des Abgases in Richtung der Kühlmittelströmungskanäle sorgt. Bei der hier beschriebenen Ausführungsform des Blocks 5 weist der Block keinen Boden auf, was die in der Anmeldungseinleitung genannten Probleme beim Verlöten von in einen Boden eingesteckten Strömungskanälen vermeidet. Somit entspricht die hier näher erläuterte Ausführungsform bereits einem vergleichsweise gut auf einen Lötprozess ausgerichteten Konzept ohne Boden. Im Übrigen wird diesbezüglich auf oben genannte Anmeldungen des Anmelders hingewiesen.

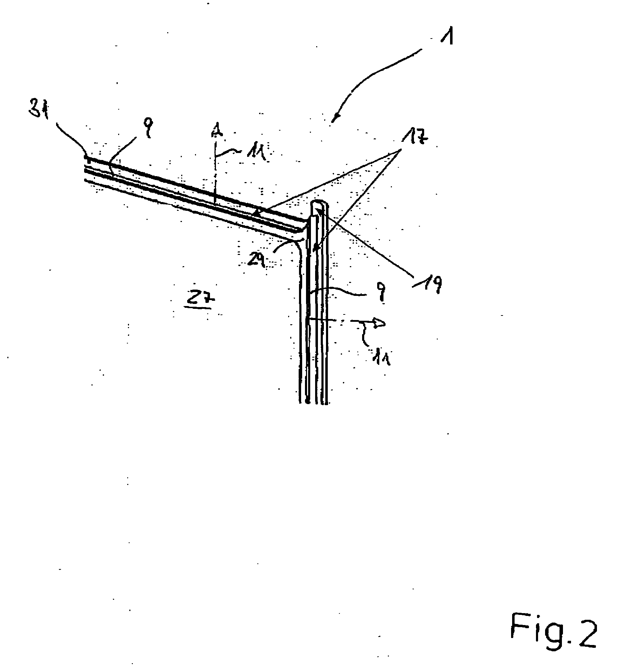

In Fig. 1 ist das Blockabschlusselement 1 mit einer blockseitig, also auf der Seite des Blocks 5, angeordneten Anlagefläche 9 versehen, wobei eine in Fig. 2 näher gezeigte Flächennormale 11 der Anlagefläche 9 im Wesentlichen in einer radialen Richtung 13 ausgerichtet ist. Grundsätzlich kann eine solche Anlagefläche 9 auch auf einer blockabgewandten Seite des Blockabschlusselements 1 angeordnet sein, um das Anlöten weiterer Anschlussstücke zu ermöglichen. Die blockseitig angeordnete Anlagefläche 9 bildet dadurch einen radialen Anschlag für einen Blockrand 15, der bei dieser Ausführungsform Teil eines Gehäuserands, nämlich eines in Fig. 1 mit Bezugszeichen 15 versehenen Randes des Deckels 3A und des Randes des Mantels 3A ist.

Wie aus der Zusammenschau von Fig. 1 und Fig. 2 ersichtlich ist, verläuft die Anlagefläche 9 entlang des vollen Umfangs des Blockabschlusselements 1 durchgehend und der Verlauf als auch die Kontur 17 der Anlagefläche 9 entspricht, darüber hinaus zur Bildung einer formschlüssigen Verbindung zwischen der Anlagefläche 9 und dem Blockrand 15, einem Verlauf als auch der Kontur des Blockrandes 15. Vorliegend ist die Anlagefläche 9 als Teil einer vollständig entlang der umfangsverlaufenden Stufenkontur 17 an einem Absatz 29 auf dem Flanschteil 31 gebildet. Der mit dem Bezugszeichen 19 bezeichnete Teil der Kontur setzt dabei stumpf auf die stirnseitige Kontur 21 des Gehäuses auf. Selbstverständlich sind auch andere Konturen bei der Anbindung des Blockabschlusselements 1 an das Gehäuse 3 möglich, die von der hier gezeigten Stufenkontur 17 abweichen.

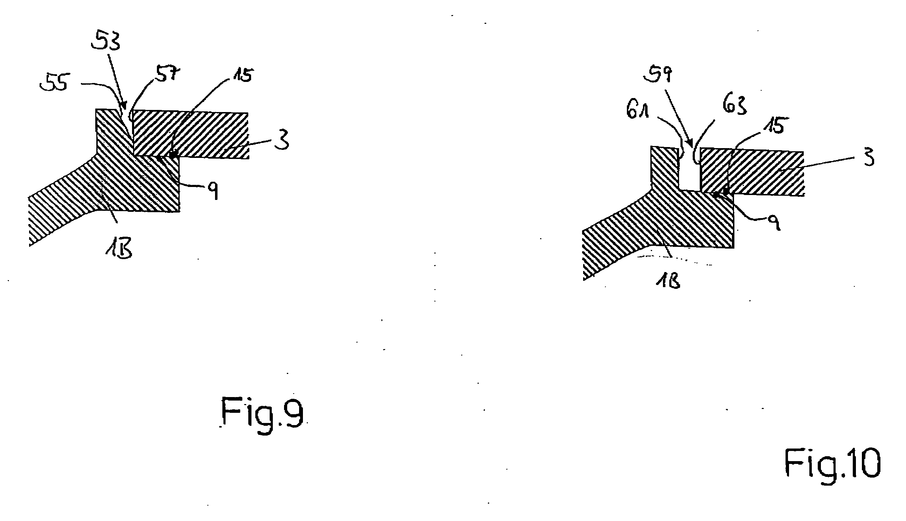

Der weiter in Fig. 9 und Fig. 10 beispielhaft ausgeführte Fügebereich zwischen der Anlagefläche 9 und dem Blockrand 15 sieht einen Stoffschluss als Lötverbindung vor, wobei gemäß der Erkenntnis der Erfindung der Fügebereich zwischen Anlagefläche 9 und Blockrand 15 eine Breite von weniger als 0,2 mm, vorliegend sogar weniger als 0,1 mm, einnimmt. Dies ist insbesondere der Fall bei einem Fügebereich, welcher zwischen Anlagefläche 9 und Blockrand 15 im Bereich des Deckels 3A des Gehäuses 3 liegt.

Fig. 3 bis Fig. 6 zeigen weitere bevorzugte Ausbildungen eines Blockabschlusselements im Rahmen des Konzepts der vorliegenden Erfindung, wobei zu berücksichtigen ist, dass die dabei ausgeführten Merkmale der einzelnen Ausbildungen, sei es hinsichtlich der konstruktiven Ausführung derselben oder sei es hinsichtlich ihrer Material- und Herstellungsbeschaffenheit, in beliebiger Weise, angepasst auf die Bedürfnisse der konkreten Anwendung bei einem Wärmetauscher, sei es in Form eines Abgaskühlers oder eines Ladeluftkühlers etc., kombiniert und vorteilhaft abgewandelt werden können.

Fig. 3 zeigt in Ansicht (A) und (B) ein Blockabschlusselement 1A in Form eines einteilig gebildeten Diffusors, welcher als tiefgezogenes Bauteil hergestellt ist. Die mit den Bezugszeichen 23 versehene in Ansicht (A) von Fig. 3 gezeigte Fläche ist dabei durch das Material des Blockabschlusselements 1A geschlossen und weist an geeigneter Stelle die in Ansicht (B) weiter zu erkennende Auswölbung eines Diffusoranschlusses 25 auf, der zum Anschluss eines nicht näher dargestellten Gaseintrittsanschlusses dient. Während das in Fig. 1 und Fig. 2 dargestellte Blockabschlusselement 1 in Form eines bloßen Flanschteils 31 mit Absatz 29 gebildet ist, kann in dessen Innenraum 27 je nach Bedarf ein entsprechendes weiteres Bauteil, beispielsweise auch ein Diffusor, eingesetzt werden. Das in Fig. 3 dargestellte Blockabschlusselement 1A hat den Vorteil, dass es besonders preisgünstig einteilig mit einem Diffusoranschluss 25 herstellbar ist. Die wiederum entlang des vollen Umfangs des Blockabschlusselementes 1A durchgehend verlaufende Anlagefläche 9A ist zusammen mit einer beispielhaft ausgeführten Flächennormalen 11A in radialer Richtung gezeigt. Der deckelseitige Verlauf der Anlagefläche 9A trägt wiederum der vorteilhaften Ausgestaltung eines in U-Profilform vorgesehenen Deckels 3A Rechnung.

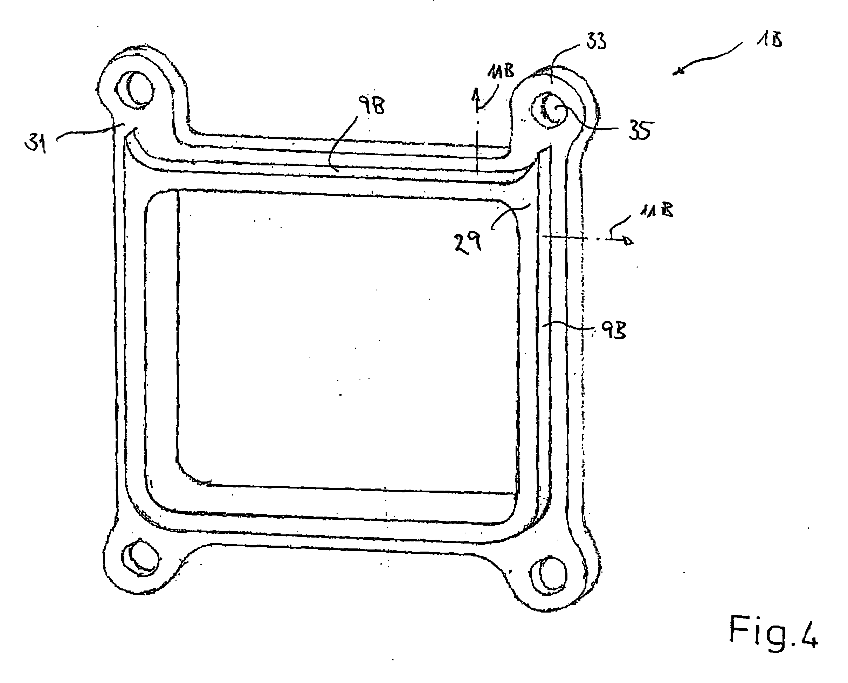

Fig. 4 zeigt eine weitere Ausbildung eines Blockabschlusselements 1B in einer Ansicht aus Richtung des Blocks 5, d.h. in einer Ansicht aus einem Gehäuseinneren. Das Blockabschlusselement 1B ist in Form eines bearbeiteten Gussteils als einteiliger Vierlochflansch gebildet. Das Gussteil wird einteilig gefertigt und die Anlagefläche 9B kann entweder durch einen Fräs- oder durch einen Erodiervorgang gebildet sein. Wie in Fig. 1 und Fig. 2 ist die Anlagefläche 9B auch bei der Ausführungsform des Blockabschlusselements 1B in Fig. 4 Teil eines blockseitig abstehenden Absatzes 29 am Flanschteil 31. Das Flanschteil 31 ist an seinen eckseitigen Enden mit Ohren 33 versehen, die zur Aufnahme eines gegebenenfalls mit einem Gewinde zu versehenen Loches 35 dienen, so dass das Blockabschlusselement 1B an ein nicht näher dargestelltes Gehäuse eines Abgaskühlers angebracht werden kann.

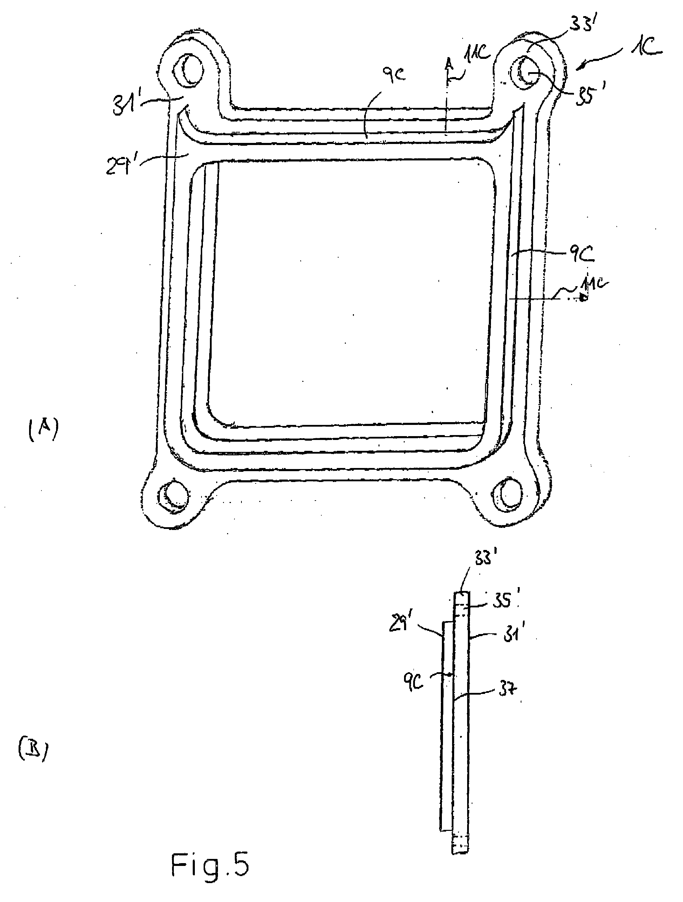

Fig. 5 zeigt in Ansicht (A) eine weitere Ausbildung eines Blockabschlusselements 1C, wiederum in Form eines Vierlochflansches, der vorliegend jedoch aus zwei verlöteten Stanzteilen gebildet ist, wobei das erste Stanzteil den Absatz 29' darstellt und das zweite Stanzteil den Rahmen 31' darstellt. Wiederum sind Ohren 33' mit Gewindebohrungen 35' vorgesehen. Die Anlagefläche 9C ist Teil des Absatzes 29'. Die Stanzteile können entlang einem in der Ansicht (B) von Fig. 5 näher gezeigten Fügebereich 37 aneinandergelötet sein.

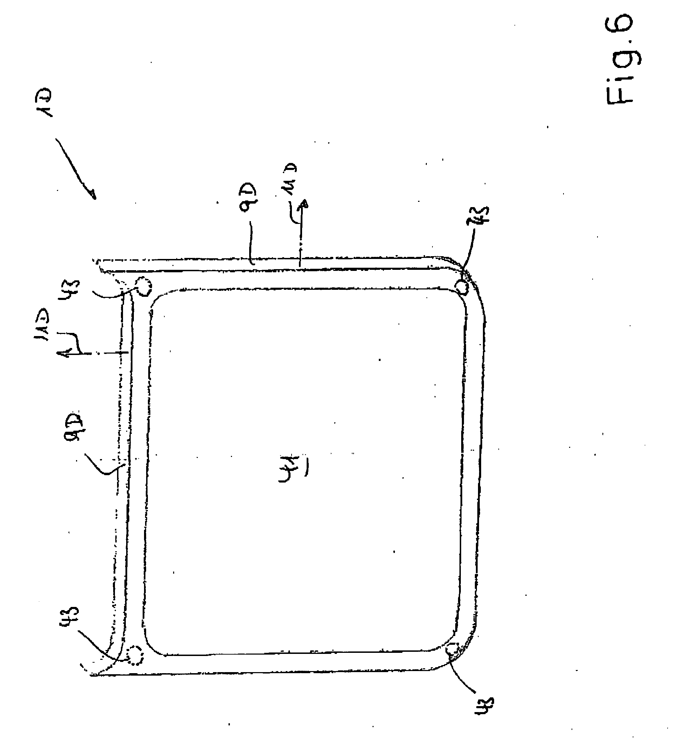

Fig. 6 zeigt eine weitere Ausbildung eines Blockabschlusselements 1D ähnlich dem in Fig. 1 und Fig. 2. Wie in Fig. 3 ist bei dieser Ausbildung eine Anlagefläche 9D als Außenrand des als bloßer Flansch ausgebildeten Blockabschlusselement 1D gebildet. Im Unterschied zu Fig. 3 ist vorliegend kein Diffusor vorgesehen, sondern der mit dem Bezugszeichen 41 versehene Raum ist offen. Somit kann je nach Anwendungsbedarf ein Diffusor eingesteckt oder stumpf aufgesetzt werden. Beispielsweise kann ein Diffusoreinsatz oder -aufsatz mit dem Blockabschlusselement 1D der Fig. 6 verschweißt werden.

Im Unterschied zu Fig. 3 zeigt Fig. 6 somit ein Blockabschlusselement 1D, das besonders vereinfacht über einen Stanzprozess hergestellt werden kann. Darüber hinaus ist es möglich bei dem Blockabschlusselement 1D der Fig. 6 in allen, oder jedenfalls einem Teil, der Flanschecken vorliegend punktiert angedeutete Öffnungen 43, beispielsweise in Form von Bohrungen oder Gewindebohrungen, vorzusehen, über welche das Blockabschlusselement 1D an einen nicht näher gezeigten Block 5 oder an ein Gehäuse 3 angebracht werden kann. Im Unterschied zu den in Fig. 4 und Fig. 5 gezeigten Ausführungsformen erweist sich die in Fig. 6 gezeigte Ausbildung des Blockabschlusselements 1D besonders als vorteilhaft für den Fall, dass kein ausreichender Bauraum für zusätzliche Ohren für Schraubverbindungen zur Verfügung stehen sollte.

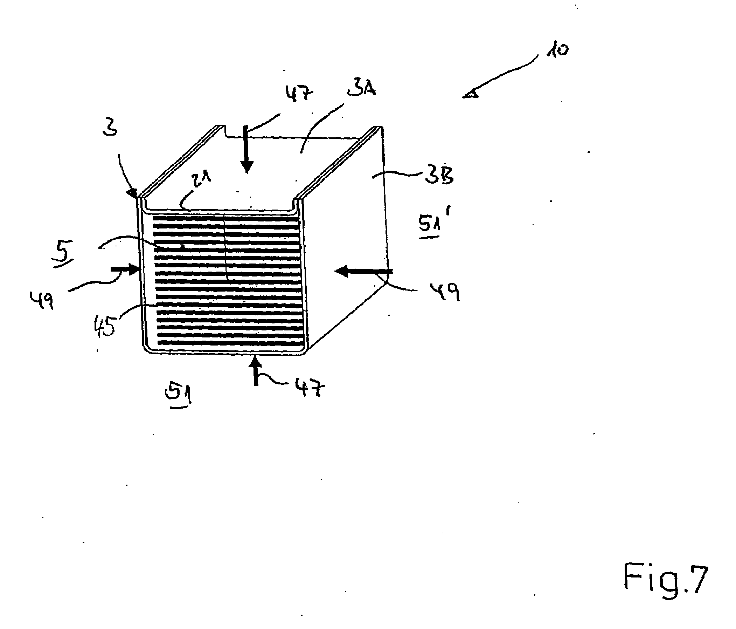

Fig. 7 stellt schematisch wiederum das in Fig. 1 gezeigte Gehäuse 3 dar, bei dem vorliegend eine Anzahl von beim Block 5 angebrachten Lotschichten 45 schematisch gezeigt ist. Die Vielzahl der Lotschichten 45 definieren vorliegend eine Hauptlötrichtung 47, in der ein besonders starker Schwund beim Löten des Blocks 5 zu erwarten ist. Dagegen ist in einer Richtung 49 senkrecht zur Hauptlötrichtung kaum Schwund zu erwarten, da in der Richtung 49 wenige bzw. keine Lotschichten vorliegen. Gemäß dem Konzept der Erfindung wird beim Herstellungsprozess bei dieser Ausführungsform durch das Vorsehen eines Blockabschlusselements 1, 1A, 1B, 1C, 1D nicht nur darauf geachtet, dass Teile vergleichbarer Dicke aneinander angebunden werden, wie beispielsweise das Gehäuse 3 und das Blockabschlusselement 1, 1A, 1B, 1C, 1D, um Thermospannungen zu vermeiden, sondern darüber hinaus wird das Vorliegen einer Hauptlötrichtung 47 vorteilhaft für die Ortswahl einer Anbringung einer Lötverbindung genutzt.

Dabei ist in Fig. 7 wiederum das Gehäuse als zusammengesetztes Gehäuse 3 aus zwei ineinandergesetzten U-förmigen Schalen, dem Deckel 3A und dem Mantel 3B, ausgelegt, von denen eine Schale - der Mantel 3B - tief ausgeformt ist, und gegebenenfalls an dem Blockabschlusselement 1, 1A, 1B, 1C, 1D fixiert wird, während die andere Schale - der Deckel 3A - flacher ausgeformt ist und als freies Gehäuseteil den Abschluss des Gehäuses in Lötrichtung 47 darstellt. Bei dieser Ausführungsform wird im Rahmen des Herstellungsverfahrens gemäß dem Konzept der Erfindung das freie Gehäuseteil bevorzugterweise mit etwas Untermaß, vorliegend im Bereich von 0,1 mm, gegenüber dem fixierten Gehäuseteil 3B gefertigt, um ein Verklemmen zwischen dem Blockabschlusselement an den stirnseitigen Blockenden 51, 51' zu vermeiden. In diesem Fall kann ein Blockabschlusselement, 1, 1A, 1B, 1C, 1D an der Lötfläche zwischen Anlagefläche 9, 9A, 9B, 9C, 9D und dem Blockrand 21 am Gehäuse 3 eine sehr einfache Geometrie, beispielsweise die Geometrie wie sie in Fig. 1, Fig. 2 oder Fig. 3 bis Fig. 6 gezeigt ist, haben. Bei der Ausgestaltung als Gussteil wie in Fig. 4 kann es, wie erläutert, beispielsweise in einem Fräsprozess oder einem Erodierprozess sehr kostengünstig bearbeitet werden. Unter Umständen kann auf eine Bearbeitung auch vollständig verzichtet werden.

Jedoch bietet insbesondere ein Blockabschlusselement 1B als Gussteil weiterhin durch Anbringen einer Fase die Möglichkeit eines sich zur Lötstelle hin verengenden Bereichs, der sich hervorragend als Lotdepot eignet. Dabei das Lot durch Kapillarkräfte in einen Lotspalt zwischen der Anlagefläche und dem Blockrand 15, wie in Fig. 9 näher erläutert, gezogen wird. Dort wird das in einer Fase 53 gebildet, nämlich zwischen einer ersten winklig zur Anlagefläche 9 stehenden Fläche 55 und einer zweiten senkrecht zum Blockrand 15 stehenden Fläche 57.

Des weiteren kann ein Lotdepot auch in der in Fig. 10 dargestellten Weise durch unvollständiges Einschieben des Blockabschlusselements 1B in das Gehäuse 3 erreicht werden. In diesem Fall ist das Lotdepot in Form eines Spielabstands 59 zwischen einer ersten senkrecht zur Anlagefläche 9 stehenden Fläche 61 und einer zweiten senkrecht zum Blockrand 15 stehenden Fläche 63 gebildet.

Weiterhin kann eine Lötfläche, d.h. eine Anlagefläche 9, 9A, 9B, 9C, 9C eines Blockabschlusselements 1, 1A, 1B, 1C, 1D zwischen Anlagefläche 9 und Blockrand 15 auch in einem Stanzprozess erzeugt werden, wie dies beispielsweise als umlaufende Schnittkante an einem tiefgezogenen Blechdiffusor in Fig. 3 gezeigt ist.

Selbstverständlich können die in Fig. 9 und Fig. 10 erläuterten Mechanismen für ein Lötdepot auch für alle anderen in dieser Anmeldung aufgezeigten Blockabschlusselemente 1, 1A, 1B, 1C, 1D angewandt werden.

Eine weitere günstige Ausgestaltung ergibt sich, wenn das Blockabschlusselement eine teilweise oder vollständig umlaufende Stufenkontur aufweist, wie diese bei Blockabschlusselementen 1, 1B und 1C in Fig. 1, Fig. 2, Fig. 4 und Fig. 5 gezeigt ist. Mit einem Teil 19 schlägt das Blockabschlusselement 1 am Gehäuseteil stumpf an, da dadurch in einer sehr engen Toleranzkette die Blocklänge inklusive Blockabschlusselement, also beispielsweise einem Eintritts- oder Austrittsdiffusor, dargestellt werden kann. Eine Stufenkontur kann auch entstehen, indem zwei aufeinanderliegende Blechstanzteile verwendet werden, die bevorzugterweise ebenfalls miteinander im eigentlichen Lötprozess verlötet werden und zuvor einfach nur fixiert werden, beispielsweise nur durch Schweißheften, Verstemmen, Vernieten etc. Dazu eignet sich insbesondere das Blockabschlusselement 1C wie es in Fig. 5 gezeigt ist.

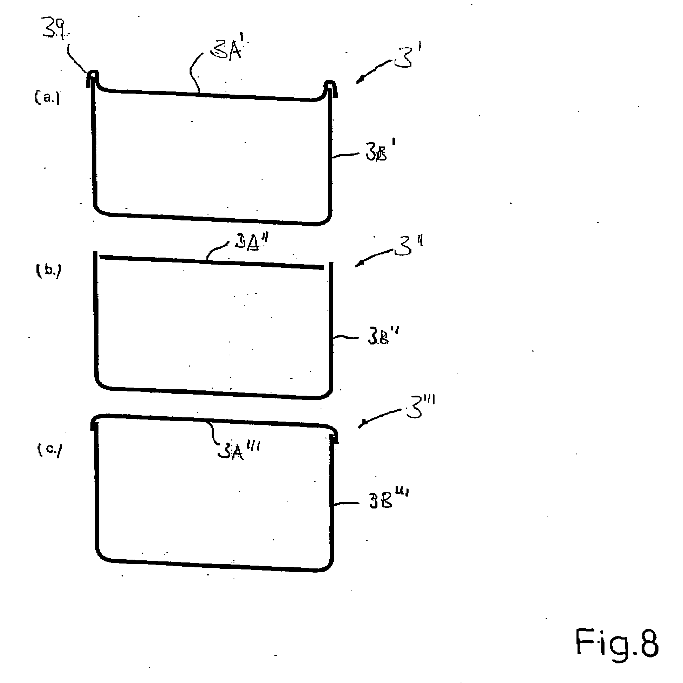

In Kombination mit den hier erläuterten Ausbildungen eines Blockabschlusselements 1, 1A, 1B, 1C, 1D eignet sich eine Vielzahl von Gehäusevarianten wie sie in Fig. 8 in den Ansichten (A), (B) oder (C) beispielhaft gezeigt sind. In jeder der Varianten 3', 3", 3"' des Gehäuses ist der Mantel 3B', 3B", 3B"' jeweils als ein U-förmiges Profil gebildet. Der Deckel 3A' kann in der in Ansicht (A) gezeigten Ausbildung mit einer Falz 39 versehen werden, um am Mantel 3B' befestigt zu werden. In der Ansicht (B) ist ein Deckel 3A' gezeigt, der flach ausgebildet ist. Bevorzugt ist auch eine Ausführungsform eines Deckels 3A"' wie er in Ansicht (C) von Fig. 8 gezeigt ist. Dort ist der Deckel 3A"' wiederum als U-Profil gebildet, jedoch im Vergleich zu Fig. 1 und Fig. 7 umgekehrt auf den Mantel 3B"' aufgesetzt.

In Bezug auf Fig. 7 lässt sich eine besonders ideale Umsetzung eines erfindungsgemäßen Blockabschlusselements in Kombination mit einem nicht näher dargestellten Lötgestell beim Herstellungsprozess erreichen, welches den Abgaskühler 10 in der Hauptlötrichtung 47 während des Lötprozesses fixiert wird. Dabei wird zweckmäßigerweise für das Lötgestell ein Werkstoff mit geringerem Wärmeausdehnungskoeffizienten eingesetzt als der Wärmeausdehnungskoeffizient des Wärmeübertragerwerkstoffs des Abgaskühiers 10. Als besonders geeignet hat sich dabei ein CFC- (kohlefaserverstärkter Kohlenstoff) Werkstoff oder ein keramischer Werkstoff erwiesen. Gleichermaßen könnten auch Stahllötgestelle für Aluminiumwärmetauscher genutzt werden. Durch die unterschiedlichen Wärmeausdehnungskoeffizienten hat ein Lötgestell im kalten Zustand ein Übermaß gegenüber dem Abgaskühler 10, so dass das Lötgestell den Abgaskühler 10 inklusive der noch in festem Zustand vorliegenden Lotschichten aufnehmen kann. Am Ende der Aufheizphase im Lötprozess, kurz bevor die Löttemperatur erreicht wird, legt sich der Abgaskühler 10 am Lötgestellt an, und zwar noch bevor das Lot aufschmilzt. Alle Lötschichten 45, die idealerweise senkrecht oder mit einem stumpfen Winkel zur Hauptlötrichtung 47 eingestellt sind, werden vor dem Schmelzen des Lotes stark verpresst, aber auch Teilbereiche von Lotschichten mit spitzem Winkel zur Hauptlötrichtung 47 erfahren bereits bei einem Winkel von 10° - 25° einen ausreichenden Pressdruck. Dies wird in vorteilhafter Weise durch das Lötgestell mit einem erheblich warmfesteren Werkstoff als für den Abgaskühler 10 erreicht, so dass das Lötgestell als nahezu fester Anschlag für den zu verlötenden Abgaskühler dient.

Wenn die Temperatur schließlich die Löttemperatur erreicht. schmilzt das Lot, die vorgespannten Bauteile werden in die schmelzende Lotschicht hineingedrückt und es erfolgt eine im Vergleich zu üblichen Lötprozessen, die mit Gewichten arbeiten, sehr gute Verlötung. Für ein Blockabschlusselement 1, 1A, 1B, 1C, 1D gemäß dem Konzept der Erfindung hat das Löten mit einem festen Lötgestell erhebliche Vorteile, da dabei auch die umlaufenden Lötflächen am Blockabschlusselement schon verpresst sind bevor das Lot schmilzt. Herstellungsverfahren, die mit Gewichten oder mit Spannfedern arbeiten, können diese Vorteile gegenüber dem erfinderischen Konzept nicht erreichen, welches aufgrund der Berücksichtigung der Wärmeausdehnung und der hohen Steifigkeit des Lötgestells wirkt. Vorliegend wird das Lot beim Schmelzen besonders wirkungsvoll in einem engen Lotdepot - beispielsweise wie in Fig. 9 oder Fig. 10 gehalten und füllt einen Lötspalt durch Kapillarkräfte. Wenn beim Löten mit Gewichten oder in einem gefederten Lötgestell das Lot am Blockabschlusselement etwas vor den anderen Lotschichten im Block schmilzt, kann der Spalt am Blockabschlusselement unter Umständen beim Schmelzen des Lots noch so groß sein, dass der Lötprozess weniger stabil ist.

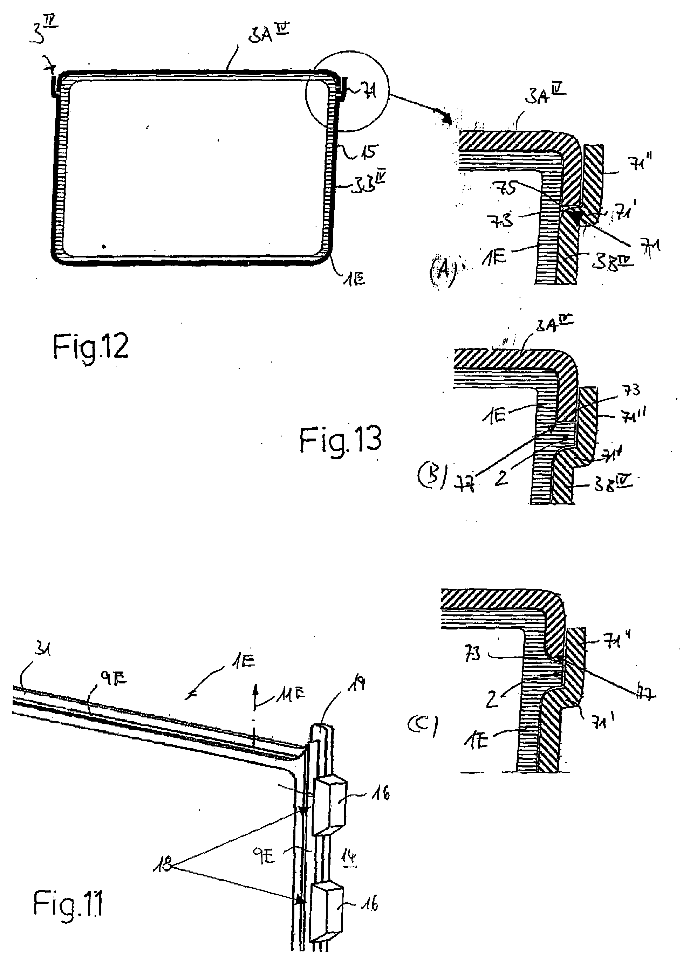

Fig. 11 zeigt eine weitere Ausführungsform eines Blockabschlusselements 1E, welches ähnlich der in Fig. 2 gezeigten Ausführungsform eines Blockabschlusselements 1 ist, und bei dem identische Teile oder Teile gleicher Funktion mit den gleichen Bezugszeichen versehen sind. Das Blockabschlusselement 1E weist wiederum eine Anlagefläche 9E auf, die eine im Wesentlichen in radialer Richtung zur Bildung eines radialen Anschlags für einen Blockrand 15 ausgerichtete Flächennormale 11E aufweist. Im Unterschied zu der in Fig. 2 gezeigten Ausführungsform eines Blockabschlusselements 1 weist das Blockabschlusselement 1E an einem seitlichen Abschnitt unter Belassung einer Lücke 14 angeordnete Materialsegmente 16 auf, sodass im Bereich der Materialsegmente 16 das Blockabschlusselement 1E eine Nut 18 gebildet ist. Deren Querschnittskontur ist im Bereich der Materialsegmente 16 durch einen innen angeordneten Nutschenkel mit der Anlagefläche 9E gebildet während der außenliegende Nutschenkel mit einer Innenseite des Materialsegments gebildet ist und deren Basis im Wesentlichen durch den stumpfen Anschlag 19 des Blockabschlusselements 1E gebildet ist. Damit weist das Blockabschlusselement 1E eine teilweise umlaufende Nutkontur 20 auf, in welche ein in Fig. 12 näher dargestellter Blockrand 15 eines Gehäuses 3^{IV} eingreifen kann und dort formschlüssig - d.h. durch einen Nutschenkel innen und durch einen Nutschenkel außen - gehalten ist. In der Fertigung braucht das Blockabschlusselement 1E bei dieser Ausführungsform also lediglich auf das Gehäuse 3^{IV} aufgesteckt werden - weitere Arbeitsschritte wie Heften oder dergleichen entfallen vorwiegend.

Das in Fig. 12 gezeigte Gehäuse 3^{IV} weist einen Mantel 3B^{IV} auf, welcher im deckelnahen Randbereich mit einer Materialausstellung 71 versehen ist. Deren variable bevorzugte Ausführungen sind in den Ansichten (A), (B) und (C) im einzelnen beispielhaft gezeigt. Ein Deckel 3A^{IV} ist vorliegend mit seinen in Richtung Mantel 3B^{IV} gebogenen Randteilen in der durch die Materialausstellung 71 gebildete Aufweitung des Mantels 3B^{IV} angeordnet, z.B. eingesetzt oder eingesteckt oder eingelegt. Mit anderen Worten, diese Ausführungsform weist zur Verbesserung eines Gehäuseaufbaus einen im Mantel 3B^{IV} angeordneten Deckel 3A^{IV} mit mantelseitig geöffnetem U-förmigen Profil auf. Insofern ähnelt die in Fig. 12 gezeigte Ausführungsform im Wesentlichen der in Fig. 8 gezeigten Ausführungsform - im Unterschied zu letzterer wird der Deckel 3A^{IV} in der am Mantel 3B^{IV} gebildeten Aufweitung angeordnet und nicht, wie in Fig. 8 gezeigt, übergestülpt.

Wiederum sind im Prinzip alle Möglichkeiten gegeben, ein Blockabschlusselement - vorliegend insbesondere ein Blockabschlusselement 1E - am Gehäuse 3^{IV} zunächst formschlüssig zu fixieren und dann stoffschlüssig festzulegen.

Fig. 13 zeigt in einer ersten Variante in Ansicht (A) einen Mantel 3B^{IV} mit einer Materialausstülpung 71, die stufenförmig im Querschnitt mit einer ersten 90°-Umformung 71' und einer anschließenden zweiten 90°-Umformung 71" gebildet ist. In die stufenförmige Materialausstülpung greift der mantelseitig U-förmig geöffnete Deckel 3A^{IV} im Wesentlichen passgenau ein, so dass dieser formschlüssig in der Materialausstülpung gehalten ist. Dabei stößt der U-förmig umgeformte Rand des Deckels 3A^{IV} mit seiner Stirnseite 73 auf den stufenförmigen Bereich der ersten 90°-Umformung 71' der Materialausstülpung 71 und liegt dort im Wesentlichen unter Bildung eines Hohlraums 75 an. Der Hohlraum 75 entsteht letztlich aufgrund der Konturunterschiede der Stirnseite 73 - welche im Wesentlichen eine eckige Kontur aufweist - und der stufenförmigen Materialausstülpung 71 - die eine im Wesentlichen gerundete Kontur aufweist - insbesondere der Konturunterschiede auf der Innenseite des Übergangs von der gerade verlaufenden Wand des Mantels 3B^{IV} zur ersten 90°-Umformung 71'. Der Hohlraum 75 ist in vorteilhafter Weise dazu geeignet eine ausreichende Menge von Lot aufzunehmen, so dass der Hohlraum bei einer abschließenden lotschlüssigen Verbindung von Deckel 3A^{IV} und 3B^{IV} als Lotdepot dienen kann.

Bei bestimmten Anwendungen hat sich gezeigt, dass es dennoch vorteilhaft sein kann, die Spalträume zwischen Deckel 3A^{IV} und Mantel 3B^{IV} möglichst eng zu halten, um vergleichbar hohe Kapillarkräfte zur Verteilung eines Lots zu gewährleisten. Mit anderen Worten, ein zu großes Lotdepot in Form eines Hohlraums, z.B. eines Hohlraums 75 bei der in Ansicht (A) gezeigten Variante, kann sich als nicht gewünscht erweisen. Um darüber hinaus auch eine festgelegte Maßhaltigkeit beim Assemblieren von Deckel 3A^{IV} und Mantel 3B^{IV} vorteilhaft gewährleisten zu können, ist bei der ansonsten im Wesentlichen gleich ausgeführten Variante der Ansicht (B) vorgesehen, dass ein Blockabschlusselement 1E mit einer einen Distanzabsatz 2 bildenden Materialverdickung im Bereich direkt oberhalb der stufenförmigen Materialausstülpung der 90°-Umformung 71' versehen ist. Auf diesen vorliegend mit oberseitig eckiger Kontur versehenen Distanzabsatz 2 der Materialverdickung stößt die Stirnseite 73 des Deckels 3A^{IV} unter Beibehaltung eines vergleichsweise engen Spalts 77. Der durch die Materialverdickung gebildete Distanzabsatz 2 weist unterseitig eine gerundete Kontur - angepasst an die gerundete Kontur des stufenförmigen Übergangs zur 90°-Umformung 71' des Mantels 3B^{IV} - auf um auch dort den Spalt 77 vergleichsweise eng zu halten. In dieser Kombination wird nicht nur eine Maßhaltigkeit bei der Assemblierung von Deckel 3A^{IV} und Mantel 3B^{IV} aufgrund der maßgenauen Platzierung des Distanzabsatzes 2 gewährleistet, sondern darüber hinaus auch ein durchgehend vergleichsweise eng gehaltener Spalt 77. Letzterer gewährleistet vergleichsweise hohe Kapillarkräfte zur Verteilung eines Lots.

Die im Übrigen ähnlich ausgeführte Variante der Ansicht (C) sieht als weitere Verbesserung auch eine auf der Oberseite des Anschlags 2 ausgeführte gerundete Kontur vor, die beispielsweise im Rahmen einer Prägung der Stirnseite 13 des Rands des Deckels 3A^{IV} erhalten werden kann. Dadurch wird insbesondere eine vergleichsweise scharfe Innenecke in der Anlagefläche zwischen Distanzabsatz 2 und Stirnseite 73 vermieden und nochmals eine vergleichsweise verbesserte enge Führung des Spalts 77 erreicht. Die in Ansicht (C) gezeigte Variante weist sehr gut ausgebildete Kapillarkräfte beim Assemblieren des Deckels 3A^{IV}, des Mantels 3B^{IV} und des Blockabschlusselements 1E auf.

Zusammenfassend wird ein Wärmetauscher, insbesondere in Abgaswärmetauscher oder Ladeluftwärmetauscher, zum Wärmetausch zwischen einem ersten Fluid, insbesondere einem Abgas oder Ladeluft, und einem zweiten Fluid, insbesondere einem Kühlmittel angegeben, der aufweist: einen Block zu voneinander getrennten und wärmetauschenden Führung des ersten und zweiten Fluids; ein Blockabschlusselement zur Anbindung des Blocks an einen Fluidanschluss. Um die bei einem Lötprozess auftretenden Probleme weitgehend zu beheben, weist das Blockabschlusselement eine blockseitig angeordnete Anlagefläche auf, wobei eine Flächennormale der Anlagefläche im Wesentlichen in einer radialen Richtung zur Bildung des radialen Anschlags für einen Blockrand ausgerichtet ist, und in einem Fügebereich zwischen der Anlagefläche und dem Blockrand ist ein Stoffschluss als eine Lötverbindung gebildet. Die Erfindung führt auf eine Anordnung und ein Verfahren zur Herstellung des Wärmetauschers.

Besonders vorteilhaft sind Ausbildungen des Blockabschlusselements mit einer Stufenkontur, im Rahmen des Herstellungsprozesses ein vor dem Lötprozess am Gehäuseteil fixiertes Blockabschlusselement, beispielsweise durch Schweißheften und ein bevorzugterweise mit Untermaß angebrachtes frei bewegliches Gehäuseteil, sowie ein Lötgestell zur Fixierung des Blockmaßes. Weiter vorteilhaft sind unterschiedlichste Ausführungsmöglichkeiten für ein Blockabschlusselement, beispielsweise in Form eines Gussflansches mit und ohne Stufenkontur oder mit und ohne Durchgangslöcher für Verschraubungen bzw. Gewinde oder ähnliches, ein Gussdiffusor mit und ohne Stufenkontur, ein Blechstanzteil als Einsteckflansch, insbesondere auch als Feinstanzteil, ein mehrlagiges bevorzugterweise verlötetes Element aus mehreren Blechstanzteilen bzw. Feinstanzteilen, eine Blechtiefziehdiffusor mit gestanzter Außenkontur und sämtliche Kombinationen dieser genannten Varianten, z.B. ein Blechstanzteil, das mit einem Gussdiffusor verlötet ist. Die oben genannten Varianten eignen sich auch für eine zusätzliche Bearbeitung von zumindestens Teilen der Lötflächen zum Gehäuse, insbesondere sind dazu der Fräsprozess und der Erodierprozess bevorzugte Kandidaten. Insgesamt wird durch das erfinderische Konzept eine kostengünstige flexible Herstellung eines Wärmetauschers ermöglicht.

## Patentansprüche

1. Wärmetauscher (10) zum Wärmetausch zwischen einem ersten Fluid, und einem zweiten Fluid aufweisend:
- einen Block (5) zur voneinander getrennten und wärmetauschenden Führung des ersten und zweiten Fluids;
- mindestens ein Blockabschlusselement (1, 1A, 1B, 1C, 1D, 1E) zur Anbindung des Blocks an mindestens einen Fluidanschluss;
**dadurch gekennzeichnet, dass**
- das Blockabschlusselement (1, 1A, 1B, 1C, 1D, 1E) eine blockseitig angeordnete Anlagefläche (9, 9A, 9B, 9C, 9D, 9E) aufweist, wobei eine Flächennormate (11, 11A, 11B, 11C, 11D, 11E) der Anlagefläche (9, 9A, 9B, 9C, 9D, 9E) im wesentlichen in einer radialen Richtung (13) zur Bildung eines radialen Anschlags für einen Blockrand (15) ausgerichtet ist, und
- in einem Fügebereich zwischen der Anlagefläche (9, 9A, 9B, 9C, 9D, 9E) und dem Blockrand (15) ein Stoffschluss gebildet ist.

2. Wärmetauscher nach Anspruch 1, **dadurch gekennzeichnet, dass** der Stoffschluss als eine Lötverbindung und/oder Schweißverbindung und/oder Klebeverbindung gebildet ist.

3. Wärmetauscher nach Anspruch 1 oder 2, **dadurch gekennzeichnet, dass** die Anlagefläche (9, 9A, 9B, 9C, 9D, 9E) als eine wenigstens an einem Teil des Umfangs des Blockabschlusselements verlaufende Anlagefläche (9, 9A, 9B, 9C, 9D, 9E) gebildet ist, insbesondere die Anlagefläche (9, 9A, 9B, 9C, 9D, 9E) entlang eines vollen Umfangs des Blockabschlusselements (1, 1A, 1B, 1C, 1D, 1E) durchgehend verläuft.

4. Wärmetauscher nach einem der Ansprüche 1 bis 3 **dadurch gekennzeichnet, dass** ein Verlauf und/oder eine Kontur (17) der Anlagefläche (9, 9A, 9B, 9C, 9D, 9E) zur Bildung einer formschlüssigen Verbindung zwischen der Anlagefläche (9, 9A, 9B, 9C, 9D, 9E) und dem Blockrand (15) einem Verlauf und/oder einer Kontur des Blockrandes (15) entspricht.

5. Wärmetauscher nach einem der Ansprüche 1 bis 4 **dadurch gekennzeichnet, dass** die Anlagefläche (9, 9A, 9B, 9C, 9D, 9E) Teil einer teilweise oder vollständig entlang des Umfangs umlaufenden Stufenkontur (17) ist.

6. Wärmetauscher nach einem der Ansprüche 1 bis 5, **dadurch gekennzeichnet, dass** die Anlagefläche (9, 9A, 9B,9C, 9D, 9E) Teil einer teilweise oder vollständig entlang des Umfangs umlaufenden Nutkontur (18) ist.

7. Wärmetauscher nach einem der Ansprüche 1 bis 6, **dadurch gekennzeichnet dass** das Blockabschlusselement (1, 1A, 1B, 1C, 1D, 1E) eine Nut aufweist, in der ein Blockrand (15), insbesondere mit einer stirnseitigen Kontur (21) des Blockrandes (15), aufgenommen ist.

8. Wärmetauscher nach einem der Ansprüche 1 bis 7 **dadurch gekennzeichnet, dass** die Lötverbindung einen Fügebereich zwischen Anlagefläche (9, 9A, 9B, 9C, 9D, 9E) und Blockrand (15) von weniger als 0.2mm, vorzugsweise von weniger als 0.1 mm, einnimmt.

9. Wärmetauscher nach einem der Ansprüche 1 bis 8 **dadurch gekennzeichnet, dass** die Anlagefläche (9, 9A, 9B, 9C, 9D, 9E) und/oder der Blockrand (15), zwischen der ein Stoffschluss, insbesondere als eine Lötverbindung, gebildet ist, zum überwiegenden Teil senkrecht oder in einem stumpfen Winkel zu einer Hauptlötrichtung (17) angeordnet ist.

10. Wärmetauscher nach einem der Ansprüche 1 bis 9 **dadurch gekennzeichnet, dass** die Anlagefläche (9, 9A, 9B, 9C, 9D, 9E) und der Blockrand (15) an wenigstens einer Stelle vor einem Stoffschluss, insbesondere vor einer Lötverbindung, aneinander fixiert sind, vorzugsweise stoffschlüssig fixiert sind, insbesondere schweißfixiert sind.

11. Wärmetauscher nach Anspruch 10 **dadurch gekennzeichnet, dass** die Anlagefläche (9, 9A, 9B, 9C, 9D, 9E) und der Blockrand (15) zwischen der ein Stoffschluss, insbesondere als eine Lötverbindung, gebildet ist zum überwiegenden Teil in einer Richtung entlang der fixierten Stelle gebildet ist.

12. Wärmetauscher nach einem der Ansprüche 1 bis 11 **dadurch gekennzeichnet, dass** die Anlagefläche (9, 9A, 9B, 9C, 9D, 9E) an einem vom Blockabschlusselement (1, 1A, 1B, 1C, 1D, 1E) blockseitig abstehenden Absatz (29, 29') gebildet ist.

13. Wärmetauscher nach einem der Ansprüche 1 bis 12 **dadurch gekennzeichnet, dass** der Blockrand (15) an einem Gehäuse (3, 3', 3", 3"',3^{IV}) des Blocks (5) gebildet ist, insbesondere einem mehrteiligen Gehäuse, wobei das Gehäuse einen Mantel (3A, 3A', 3A", 3A"',3A^{IV}) und einen Deckel (3B, 3B', 3B", 3B"',3B^{IV}) aufweist, wobei insbesondere der Mantel (3A, 3A', 3A", 3A"',3A^{IV}) und der Deckel (3B, 3B', 3B", 3B"', 3B^{IV}) U-förmig ausgebildet ist.

14. Wärmetauscher nach einem der Ansprüche 1 bis 13, **dadurch gekennzeichnet, dass** der Blockrand einen Distanzabsatz (2) zwischen einem Mantel (3A, 3A', 3A", 3A"',3A^{IV}) und einem Deckel (3B, 3B', 3B", 3B"', 3B^{IV}) eines Gehäuses aufweist.

15. Wärmetauscher nach einem der Ansprüche 1 bis 14 **dadurch gekennzeichnet, dass** das Blockabschlusselement (1, 1A, 1B, 1C, 1D, 1E) wenigstens zur Anbindung des Blocks (5) an einen Fluidanschluss in Form einer Eintrittführung und/oder Austrittführung für das erste Fluid vorgesehen ist.

16. Wärmetauscher nach einem der Ansprüche 1 bis 15 **dadurch gekennzeichnet, dass** das Blockabschlusselement (1, 1A, 1B, 1C, 1D) in Form eines Diffusors, insbesondere eines Eintrittdiffusors oder Austrittdiffusors, gebildet ist.

17. Wärmetauscher nach einem der Ansprüche 1 bis 16 **dadurch gekennzeichnet, dass** Blockabschlusselement (1, 1A, 1B, 1C, 1D, 1E) in Form eines Flansches, insbesondere eines Eintrittflansches oder Austrittflansches, gebildet ist.

18. Wärmetauscher nach einem der Ansprüche 1 bis 17 in Form eines Abgas-Wärmetauschers, insbesondere -Kühlers.

19. Wärmetauscher nach einem der Ansprüche 1 bis 18 in Form eines Ladeluttwärmetauschers, insbesondere -Kühlers.

20. Anordnung zur Herstellung eines Wärmetauschers nach einem der Ansprüche 1 bis 19 aufweisend:
einen Block (5) zur voneinander getrennten und wärmetauschenden Führung des ersten und zweiten Fluids;
mindestens ein Blockabschlusselement (1, 1A, 1B, 1C, 1D, 1E) zur Anbindung des Blocks (5) an mindestens einen Fluidanschluss;
**dadurch gekennzeichnet, dass**
das Blockabschlusselement (1, 1A, 1B, 1C, 1D, 1E) eine blockseitig angeordnete Anlagefläche (9, 9A, 9B, 9C, 9D, 9E) aufweist, wobei eine Flächennormale (11, 11A, 11B, 11C, 11D, 11E) der Anlagefläche (9, 9A, 9B, 9C, 9D, 9E) im Wesentlichen in einer radialen Richtung (13) zur Bildung eines radialen Anschlags für einen Blockrand (15) ausgerichtet ist und wobei zwischen der Anlagefläche (9, 9A, 9B, 9C, 9D, 9E) und dem Blockrand (15) ein für die Bildung eines Stoffschlusses als Lötverbindung vorgesehener Spalt gebildet ist.

21. Anordnung nach Anspruch 20, **dadurch gekennzeichnet, dass** der Stoffschluss als eine Lötverbindung und/oder Schweißverbindung und/oder Klebeverbindung gebildet ist.

22. Anordnung nach Anspruch 20 oder 21, **dadurch gekennzeichnet, dass** der Spalt für die Bildung eines Stoffschlusses, insbesondere als eine Lötverbindung, in seiner Breite begrenzt ist, insbesondere der Spalt eine Breite zwischen Anlagefläche (9, 9A, 9B, 9C, 9D, 9E) und Blockrand (15) von weniger als 0.2mm, vorzugsweise von weniger als 0.1mm, einnimmt.

23. Anordnung nach einem der Ansprüche 20 bis 22, **dadurch gekennzeichnet, dass** der Spalt mit Lot gefüllt ist und/oder das Lot in direkter Nachbarschaft des Spaltes in einem zur Ausbildung eines Lotdepots geeigneten Bereich angeordnet ist.

24. Anordnung nach einem der Ansprüche 20 bis 23, **dadurch gekennzeichnet, dass** das Lotdepot in einem zwischen Block und Blockabschlusselement (1, 1A, 1B, 1C, 1D, 1E) ausgebildeten Abstandsbereich gebildet ist.

25. Anordnung nach einem der Ansprüche 20 oder 24, **dadurch gekennzeichnet, dass** ein Bereich oder Abstandsbereich in Form einer Fase, insbesondere zwischen einer ersten (55) winklig zur Anlagefläche (9, 9A, 9B, 9C, 9D, 9E) und einer zweiten (57) senkrecht zum Blockrand (15), insbesondere senkrecht zu einer Blockrandfläche, stehenden Fläche, gebildet ist.

26. Anordnung nach einem der Ansprüche 20 bis 25, **dadurch gekennzeichnet, dass** ein Bereich oder Abstandsbereich in Form eines Spielabstands zwischen Blockabschlusselement (1, 1A, 1B, 1C, 1D, 1E) und Block (5), insbesondere zwischen einer ersten (59) senkrecht zur Anlagefläche (9, 9A, 9B, 9C, 9D, 9E) und einer zweiten (63) senkrecht zum Blockrand (15), insbesondere senkrecht zu einer Blockrandfläche, stehenden Fläche gebildet ist.

27. Anordnung nach einem der Ansprüche 20 bis 26, **dadurch gekennzeichnet, dass** die Anlagefläche (9, 9A, 9B, 9C, 9D, 9E) und der Blockrand an wenigstens einer Stelle vor einer Lötverbindung aneinander fixiert sind, insbesondere die Anlagefläche (9, 9A, 9B, 9C, 9D, 9E) und der Blockrand (15) zwischen der ein Stoffschluss als eine Lötverbindung gebildet werden soll zum überwiegenden Teil entlang der wenigstens einen fixierten Stelle gebildet ist.

28. Anordnung nach einem der Ansprüche 20 bis 27, **dadurch gekennzeichnet, dass** das Gehäuse (3, 3', 3", 3"') in Form eines mehrteiligen Gehäuses mit einem, insbesondere U-förmig ausgebildeten, Mantel (3B, 3B', 3B", 3B"' und Deckel (3A, 3A', 3A", 3A"') gebildet ist, wobei nur im Bereich des Mantels (3B, 3B', 3B", 3B"') die Anlagefläche (9, 9A, 9B, 9C, 9D, 9E) und der Blockrand (15) vor einem Stoffschluss, insbesondere vor einer Lötverbindung, aneinander fixiert sind.

29. Anordnung nach Anspruch 20 bis 28, **dadurch gekennzeichnet, dass** der Spalt im Bereich des Deckels (3A, 3A', 3A", 3A"') eine Breite zwischen Anlagefläche (9, 9A, 9B, 9C, 9D, 9E) und Blockrand (15) von weniger als 0,1 mm einnimmt.

30. Anordnung nach einem der Ansprüche 20 bis 29, **dadurch gekennzeichnet, dass** der Block (5) und das Blockabschlusselement (1, 1A, 1B, 1C, 1D, 1E) in einem Lötgestell angeordnet sind, insbesondere das Lötgestell einen geringeren Wärmeausdehnungskoeffizienten aufweist als der Block (5) und/oder das Blockabschlusselement (1, 1A, 1B, 1C, 1D, 1E).

31. Anordnung nach Anspruch 30 **dadurch gekennzeichnet, dass** das Lötgestell wenigstens teilweise aus einem kohlefaserverstärkten Werkstoff und/oder einem keramischen Werkstoff gebildet ist.

32. Verfahren zur Herstellung eines Wärmetauschers nach einem der Ansprüche 1 bis 19, insbesondere mit einer Anordnung nach einem der Ansprüche 19 bis 30, aufweisend die Schritte:
- Bereitstellen des Blocks (5) zur voneinander getrennten und wärmetauschenden Führung des ersten und zweiten Fluids;
- Bereitstellen des mindestens einen Blockabschlusselements (1, 1A, 1B, 1C, 1D) zur Anbindung des Blocks an mindestens einen Fluidanschluss;
**dadurch gekennzeichnet, dass**
- das Blockabschlusselement (1, 1A, 1B, 1C, 1D, 1E) eine blockseitig angeordnete Anlagefläche (9, 9A, 9B, 9C, 9D, 9E) aufweist, wobei eine Flächennormale (11, 11A, 11B, 11C, 11D, 11E) der Anlagefläche (9, 9A, 9B, 9C, 9D, 9E) im Wesentlichen in einer radialen Richtung zur Bildung eines radialen Anschlags für einen Blockrand (15) ausgerichtet ist,
wobei zwischen der Anlagefläche (9, 9A, 9B, 9C, 9D, 9E) und dem Blockrand (15) ein für die Bildung eines Stoffschlusses vorgesehener Spalt gebildet wird, wobei das Blockabschlusselement (1, 1A, 1B, 1C, 1D, 1E) an den Block (5) gesteckt wird, und der Stoffschluss gebildet wird.

33. Verfahren nach Anspruch 32, **dadurch gekennzeichnet, dass** der Stoffschluss als Lötverbindung gebildet wird, wobei der Spalt mit Lot gefüllt wird und/oder das Lot in direkter Nachbarschaft des Spaltes in einem zur Ausbildung eines Lotdepots geeigneten Bereich angeordnet wird und ein Lötprozess ausgeführt wird, wobei sich, während das Lot schmilzt, der Blockrand (15) an die Anlagefläche (9, 9A, 9B, 9C, 9D, 9E) anlegt.

34. Verfahren nach Anspruch 32 oder 33, **dadurch gekennzeichnet, dass** das Blockabschlusselement (1, 1A, 1B, 1C, 1D, 1E) in den Block (5) eingesteckt wird, so dass die Anlagefläche (9, 9A, 9B, 9C, 9D, 9E) gegenüber dem Blockrand (15) angeordnet wird.

35. Verfahren nach einem der Ansprüche 32 bis 34, **dadurch gekennzeichnet, dass** ein Gehäuse (3, 3', 3", 3"') in Form eines mehrteiligen Gehäuses mit einem, insbesondere U-förmigen, Mantel (3B, 3B', 3B", 3B"') und Deckel (3A, 3A', 3A", 3A"') gebildet ist, und nur im Bereich des Mantels (3B, 3B', 3B", 3B"') die Anlagefläche (9, 9A, 9B, 9C, 9D, 9E) und der Blockrand (15) vor einem Stoffschluss, insbesondere vor einer Lötverbindung, aneinander fixiert werden.

36. Verfahren nach einem der Ansprüche 32 bis 35, **dadurch gekennzeichnet, dass** der Block (5) mit dem Blockabschlusselement (1, 1A, 1B, 1C, 1D, 1E) in ein Lötgestell eingebracht wird, insbesondere das Lötgestell einen geringeren Wärmeausdehnungskoeffizienten aufweist als der Block (5) und/oder das Blockabschlusselement (1, 1A, 1B, 1C, 1D, 1E).

37. Verfahren nach Anspruch 36, **dadurch gekennzeichnet, dass** der Wärmeausdehnungskoeffizient des Lötgestells derart geringer als der des Blocks (5) und/oder des Blockabschlusselements (1, 1A, 1B, 1C, 1D, 1E) ist, dass die Anlagefläche (9, 9A, 9B, 9C, 9D, 9E) und der Blockrand (15) vor dem Schmelzen des Lots aneinander gedrückt werden.

38. Verfahren nach einem der Ansprüche 32 bis 37, **dadurch gekennzeichnet, dass** das Blockabschlusselement (1, 1A, 1B, 1G, 1D, 1E) insbesondere ein Diffusor oder Flansch, durch einen Tiefziehprozess oder Stanzprozess oder Gussprozess bereitgestellt wird.

39. Verfahren nach einem der Ansprüche 32 bis 38, **dadurch gekennzeichnet, dass** das Gehäuse (3, 3', 3", 3"') bzw. die Gehäuseteile, insbesondere der Mantel (3B, 3b', 3B", 3B"') und oder der Deckel (3A, 3A', 3A", 3A"') als ein Tiefziehteil bereitgestellt werden.

40. Verfahren nach einem der Ansprüche 32 bis 39, **dadurch gekennzeichnet, dass** die Anlagefläche (9, 9A, 9B, 9C, 9D, 9E) in einem Fräsprozess und/oder Erodierprozess angebracht wird.
